# EUROPÄISCHE PATENTSCHRIFT

(11) **EP 0 892 894 B1**
(45) Veröffentlichungstag und Bekanntmachung des Hinweises auf die Patenterteilung: **11.12.2002**
(21) Anmeldenummer: 98904110.8
(22) Anmeldetag: 21.01.1998
(51) Int. Cl.: F16D 33/16

(54) **VERFAHREN ZUM BETREIBEN EINER HYDRODYNAMISCHEN KUPPLUNG UND HYDRODYNAMISCHE KUPPLUNG**
PROCESS FOR OPERATING A HYDRODYNAMIC CLUTCH AND HYDRODYNAMIC CLUTCH
PROCEDE D'EXPLOITATION D'UN EMBRAYAGE HYDRODYNAMIQUE ET EMBRAYAGE HYDRODYNAMIQUE

(30) Priorität: 22.01.1997 DE 29700988 U; 20.02.1997 DE 19706652
(43) Veröffentlichungstag der Anmeldung: 27.01.1999
(73) Patentinhaber: Voith Turbo GmbH & Co. KG, 89522 Heidenheim (DE)
(72) Erfinder: SCHUST, Bernhard, D-74594 Kressberg (DE); BREGLER, Haymo, D-74564 Crailsheim (DE)
(74) Vertreter: Dr. Weitzel & Partner
(86) Internationale Anmeldenummer: EP9800313
(87) Internationale Veröffentlichungsnummer: WO98032987

(56) Entgegenhaltungen:
- DE-A- 3 531 987
- DE-A- 19 512 367
- FR-A- 1 236 353
- GB-A- 896 195

## Beschreibung

Die Erfindung betrifft ein Verfahren zum Betreiben einer hydrodynamischen Kupplung, im einzelnen mit den Merkmalen aus dem Oberbergriff des Anspruchs 1; ferner eine hydrodynamische Kupplung, im einzelnen mit den Merkmalen aus dem Oberbegriff des Anspruchs 8.

Hydrodynamische Kupplungen zur Drehmomentenübertragung sind in einer Vielzahl von Ausführungen, beispielsweise wie in den Druckschriften
1.) CR 252
2.) J.M. Voith GmbH: "Hydrodynamik in der Antriebstechnik"; Vereinigte Fachverlage Krauskopf Ingenieur Digest; Mainz 1987
beschrieben, bekannt. Derartige Kupplungen umfassen wenigstens zwei koaxial zueinander angeordnete Schaufelräder - ein Primärschaufelrad und ein Sekundärschaufelrad, welche miteinander wenigstens einen torusförmigen Arbeitsraum bilden. Das Primärschaufelrad fungiert dabei als Pumpenrad und das Sekundärschaufelrad als Turbinenrad. Das Primärschaufelrad ist mit einer wenigstens mittelbar mit einer Antriebsmaschine koppelbaren Antriebswelle drehfest verbindbar. Das Sekundärschaufelrad ist mit einer wenigstens mittelbar mit einer anzutreibenden Maschine koppelbaren Abtriebswelle drehfest verbindbar. Zur Übertragung von Drehmoment sind die Arbeitsräume mit Betriebsmittel befüllbar. Das Betriebsmittel wird aufgrund der Primärschaufelradrotation während des Betriebes der Kupplung umgewälzt und erzeugt an der Beschaufelung des Sekundärschaufelrades ein Reaktionsmoment. Dieser Kreislauf an Betriebsmittel zwischen Primär- und Sekundärschaufelrad wird auch als Arbeitskreislauf bezeichnet. Dabei wird jedoch nicht die gesamte Strömungsenergie in Reaktionsmoment umgewandelt, sondern nur ein Teil, während der restliche Anteil in Wärme umgesetzt wird. Die Kühlung des Betriebsmittels während des Betriebes der Kupplung kann auf unterschiedliche Art und Weise realisiert werden. Denkbar ist ein, dem Arbeitskreislauf zugeordneter Kühlkreislauf, über welchen während des Betriebes fortlaufend ein Teil des Betriebsmittels geführt wird. Beispielsweise kann dazu das erwärmte Betriebsmittel über entsprechende Öffnungen in den Schaufelrädern und über Düsen in eine mit der Drehzahl des Primärschaufelrades rotierende Pumpschale gelangen. Dort wird das Betriebsmittel von einem gegen die Drehrichtung stehenden Staurohr aufgenommen. Das Staurohr greift in Einbaulage oberhalb der Kupplungsachse in die Pumpschale ein. Aufgrund der Druckverhältnisse reicht die Strömungsenergie des Betriebsmittels, welches über das Staurohr aufgenommen wird, aus, um es ohne zusätzliche Hilfsmittel über eine Kühleinrichtung, einen Kühler oder einen Wärmetauscher der Kupplung wieder zuzuführen. Zu diesem Zweck ist dem Arbeitskreislauf während des Betriebes ein geschlossener Kühlmittelkreislauf zugeordnet.
Im stationären Zustand befindet sich immer eine konstante Menge Betriebsmittel in der Kupplung und im Kühlkreislauf. Diesem Kreislauf wird keine Flüssigkeit zugeführt oder entnommen. Eine Erhöhung oder Verminderung der Drehzahl der Arbeitsmaschine wird erzielt, indem der Kupplung Betriebsmittel zugeführt oder entnommen wird. Zu diesem Zweck sind den Arbeitsräumen des weiteren eine Zulaufleitung oder -kanal und ein Ablauf bzw. eine Ablaufleitung- oder Kanal zum Zweck des Befüllens und Entleerens zugeordnet. Die Zu- und die Ablaufleitung sind mit einer externen Betriebsmittelversorgungsanlage, beispielsweise in Form eines Betriebsmitteltanks, gekoppelt. Die Zuordnung der Zu- und Ablaufleitungen zu den Arbeitsräumen kann separat vom Kühlkreislauf oder aber unter Nutzung der Leitungen bzw. Kanäle des Kühlkreislaufes erfolgen.

Andere Möglichkeiten des Austausches oder der Kühlung des im Arbeitsraum befindlichen Betriebsmittels sind denkbar, beispielsweise die volumetrische Kühlung, d.h. der Austausch des Betriebsmittels im Arbeitskreislauf durch gleichzeitige Entnahme einer bestimmten Menge an erwärmten Betriebsmittel und Einspeisung von Betriebsmittel geringerer Temperatur in der entsprechenden Menge.

Die FR-A-1 236 353 offenbart eine hydrodynamische Kupplung, für die der Zustand Vollfullung und dessen Erkennung gewunscht wird. Die Kupplung weist zwei Schaufelräder auf, ein Pumpenrad und ein Turbinenrad, wobei das Turbinenrad von einer drehfest mit dem Pumpenrad gekoppelten Schale in axialer und radialer Richtung unter Bildung eines Zwischenraumes umschlossen wird. Mit der Schale drehfest gekoppelt ist ein Stauraum, in welchen vom Zwischenraum aus dem Arbeitsraum in diesen ausgetretenes Betriebsmittel über Durchgangsoffnungen austritt. Die Durchgangsöffnungen sind derart angeordnet, daß ein Austritt erst bei tatsächlicher Vollfüllung erzielt wird. Die Durchtrittsöffnungen sind somit erst bei tatsächlicher Vollfüllung aktiv, vorher erfolgt kein Übertritt. Das Betriebsmittel tritt somit nicht während des Befüllvorganges in einem bestimmten Verhältnis zum Füllungsgrad vom Arbeitsraum über die Schale in den Stauraum.

Ein wesentliches Problem hydrodynamischer Kupplungen besteht darin, daß je nach Einsatzzweck bei Inbetriebnahme bzw. Aktivierung aufgrund der Rotation der Läuferteile der Kupplung in einem Gehäuse die Gefahr besteht, die Kupplung nicht exakt zu be- sondern zu überfüllen, da ein bestimmter Füllungsgrad nur sehr schwer genau eingehalten werden kann. In diesem Fall sind dann durch zusätzliche Panschverluste zwischen den Läuferteilen selber, d.h. den einzelnen Schaufelrädern, und dem Gehäuse und den Läuferteilen eine Verschlechterung des Wirkungsgrades und eine zunehmende Undichtheit an den einzelnen Labyrinthen, d.h. den Betriebsmittelführungsleitungen, zu verzeichnen. Eine Lösung, welche zur Vermeidung dieser Nachteile eine zusätzliche Entleerleitung vom Gehäuse zum Tank vorsieht, ist nicht wünschenswert. Zur Vermeidung des Überfüllens wird daher die Zulaufleitung bzw. die Stelleinrichtung zur Steuerung des Zulaufes über ein Füllsignal angesteuert. Als Füllsignal fungiert dabei beispielsweise der Druck in der Ablaufleitung. Dieser wird über eine Einrichtung zur Erfassung des aktuellen Druckwertes in der Ablaufleitung aus dem Arbeitsraum gemessen. Über einen Druckschalter wird bei Überschreitung eines bestimmten Druckes die Anlage elektrisch verriegelt, so daß eine Zufuhr von weiterem Betriebsmittel verhindert wird. Das Problem bei einer derartigen Lösung besteht jedoch darin, daß dieses Signal zum einen aufgrund der unterschiedlicher Randbedingungen sehr ungenau ist und des weiteren oftmals nicht ausreicht, um ein Überfüllen der Kupplung zu verhindern. Der Druckschalter selbst muß dazu bei Inbetriebnahme immer sehr exakt eingestellt werden und ist zudem den Druckspitzen durch das geöffnete Füllventil in der Zufaufleitung ausgesetzt. Zur Verdeutlichung dieser Problematik: Im Einzelnen wird mit der Einrichtung zur Erfassung des Druckes während einer Zeitdauer vom unbefüllten Zustand der Kupplung bis zur maximalen Befüllung der Kupplung fortlaufend ein bestimmter Druckwert in der Ablaufleitung ermittelt. Dieser Druckwert nimmt stetig zu. Eine deutliche Anstiegsänderung in einer Kennlinie für den Druck in Abhängigkeit der Kupplungsfüllung erfolgt erst im Bereich einer Überfüllung, d.h. einer Kupplungsfüllung > 100 %. Jeder Druckwert ist somit proportional zu einem bestimmten Füllungsgrad. Zur Ermittlung einer Vollfüllung muß daher ein entsprechender Druckwert erfaßt werden. Toleranzen können in die Ermittlung mit eingearbeitet werden. Es verbleibt somit nur ein geringer Druckbereich, in welchem auf eine Überfüllung geschlossen werden kann. Innerhalb dieses begrenzten Druckbereiches ist eine Ansteuerung des Druckschalters notwendig. Da der ermittelte Druckwert in der Leitung jedoch noch durch eine Reihe weiterer Randfaktoren beeinflußt werden kann, entspricht häufig der erfaßte Druckwert nicht dem entsprechend dem theoretisch zugeordneten Füllungsgrad. Ein frühzeitiger Abbruch der Befüllung bei einem Befüllungsgrad < 100% oder Überfüllungen sind dann die Folge.

Der Erfindung liegt daher die Aufgabe zugrunde, ein Verfahren zum Betreiben einer hydrodynamischen Kupplung derart weiterzuentwickeln, daß die Nachteile des Standes der Technik vermieden werden. Im Einzelnen ist ein wirksamer, für unterschiedliche Einbaubedingungen geeigneter und schnell ansprechbarer Schutz gegenüber Überfüllung zu realisieren. Die erfindungsgemäße Lösung soll sich durch einen geringen konstruktiven und steuer- bzw. regelungstechnischen Aufwand auszeichnen. Die konstruktive Ausführung zur Realisierung des Überfüllschutzes sollte des weiteren sehr störunanfällig sein und einen maximal zulässigen Füllungsgrad, welcher dem allgemein maximal zulässigen oder einem frei definierbaren Füllungsgrad entsprechen kann, möglichst genau und sehr schnell erfassen sowie darauf reagieren können.

Die erfindungsgemäße Lösung ist durch die Merkmale des Anspruches 1 gekennzeichnet. Die konstruktive Ausgestaltung ist durch die Merkmale des Anspruchs 8 charakterisiert. Vorteilhafte Ausgestaltungen sind jeweils in den Unteransprüchen beschrieben.

Erfindungsgemäß wird eine hydrodynamische Kupplung, umfassend wenigstens zwei Schaufelräder, ein Primärschaufelrad und ein Sekundärschaufelrad, die miteinander wenigstens einen torusförmigen Arbeitsraum bilden, derart betrieben, daß nur noch zwei Füllungsgradzustände - ein erster Füllungsgradzustand, welcher den Zustand der Nichtfüllung und der Teilfüllung umfaßt, und ein zweiter Füllungsgradzustand, der den maximal zulässigen Füllungsgrad beschreibt, unterschieden werden, wobei dem ersten Füllungsgradzustand ein bestimmter erster, sehr geringer erster Druckwert zugeordnet ist und dem zweiten Füllungsgradzustand ein zweiter, gegenüber dem ersten Druckwert erhöhter Druck. Der Arbeitsraum wird dazu mit einem Stauraum gekoppelt. In einem bestimmten Verhältnis zum Füllungsgrad der Kupplung gelangt das Betriebsmittel vom Arbeitsraum in den Stauraum. Im Stauraum wird der Betriebsmittelstand über eine Staudruckerfassungseinrichtung abgegriffen. Diese ist wenigstens mittelbar mit einer Einrichtung zur Beeinflussung der Zulaufmenge zum Arbeitsraum, im allgemeinen einer Stelleinrichtung einer Ventileinrichtung gekoppelt. Die Staudruckerfassungseinrichtung arbeitet sozusagen nach dem Schwarz-Weiß-Prinzip. In einem ersten Füllungsgradzustand wird kein oder nur ein sehr geringer, im wesentlichen konstanter Druck erfasst und in einem zweiten Füllungsgradzustand ein gegenüber dem ersten Füllungsgradzustand wesentlich erhöhter Druck. Erst bei Auftreten des erhöhten Druckes wird die Einrichtung zur wenigstens mittelbaren Beeinflussung der Zulaufmenge, im allgemeinen ein Stellglied einer der Zulaufleitung zugeordneten Ventileinrichtung angesteuert und die Betriebsmittelzufuhr reduziert oder unterbrochen. Erfindungsgemäß wird somit jeweils nur den Betriebszuständen Nicht- oder Teilfüllung und Vollfüllung ein entsprechendes Drucksignal zugeordnet. Das Drucksignal wird über die Staudruckerzeugungs- bzw. erfassungseinrichtung aus dem sich im Stauraum einstellenden dynamischen Druck gebildet. Wichtig dabei ist, daß beim Übergang vom einen in den anderen Zustand ein ausgeprägter Signalsprung erzeugt wird, welcher sicher erkennbar ist. Dadurch wird erreicht, daß unabhängig von zusätzlichen Störgrößen bei der Betriebsmittelzufuhr, ein Überfüllen sicher erkennbar ist. Insbesondere ist dieses System nicht anfällig gegenüber Druckstößen durch das der Beeinflussung der Zulaufmenge dienende Füllventil. Eine exakte Einstellung des Druckschalters bei Inbetriebnahme kann entfallen. Eine Optimierung des Systems erübrigt sich. Das Verfahren zeichnet sich durch eine einfach realisierbare und genaue Ermittlung einer Überschreitung eines maximalen Füllungsgrades mittels einer sogenannten Schwarz-Weiß-Erkennung aus.

In der Regel wird der maximal zulässige Füllungsgrad dem tatsächlichen, maximal zulässigen Füllungsgrad entsprechen. Dieser beträgt im allgemeinen 100%. Denkbar ist es jedoch auch, den maximal zulässigen Füllungsgrad derart zu definieren, daß dieser einem bestimmten, für den konkreten Einsatzzweck vorbestimmbaren einzuhaltenden Füllungsgrad entspricht. Dieser einzuhaltende Füllungsgrad kann durch jede beliebige Teilfüllung bezogen auf den maximal zulässigen Füllungsgrad beschrieben werden.

Vorrichtungsmäßig wird dem eigentlichen Arbeitsraum eine Fangrinne zugeordnet, welche einen Stauraum bildet, der mit dem Arbeitsraum wenigstens mittelbar zum Zwecke der Betriebsmittelversorgung gekoppelt ist. Die Fangrinne ist auf einem Durchmesser angeordnet, welcher im Betrieb der hydrodynamischen Kupplung, wenigstens eine Befüllung des Stauraumes ermöglicht, die proportional zum Füllungsgrad Vollfüllung der hydrodynamischen Kupplung ist. In diesen, mit dem Arbeitsraum kommunizierenden, durch die Fangrinne gebildeten Stauraum, wird eine Staudruckerfassungseinrichtung, vorzugsweise in Form eines Staudruckrohres zum Zwecke des Abtastens der Füllstandshöhe im Stauraum eingeführt. Die Staudruckerzeugungs- bzw. erfassungseinrichtung ist gegenüber dem Stauraum derart angeordnet, daß diese bzw. bei einem Staudruckrohr dessen Öffnung bei nicht- oder nur teilbefüllter Kupplung über bzw. außerhalb dem Betriebsmittelfüllstand im Stauraum liegt, so daß diese bei diesem Füllungsgradzustand nicht befüllt wird. In diesem Fall wird kein Betriebsmittel über das Staudruckrohr abgeführt und somit wird auch kein Drucksignal erzeugt. Sobald jedoch der Füllungsgrad der Kupplung den maximal zulässigen Füllungsgrad, d.h. in der Regel die Vollfüllung erreicht, füllt sich auch der Stauraum derart an, daß die Staudruckerfassungseinrichtung, insbesondere das Staudruckrohr mit seiner Öffnung in das Betriebsmittel hineinragt, Betriebsmittel aufnimmt und somit ein Signal für einen dynamischen Staudruck von p_{dynamisch} = ( 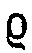 /2)xv² erzeugt.

Erfindungswesentlich dabei ist, daß das Staudruckrohr derart im Stauraum angeordnet ist, daß dieses erst bei einem Betriebsmittelspiegel im Stauraum, welcher dem maximalen Füllungsgrad der Kupplung entspricht, einen hohen dynamischen Staudruck erfasst. Während der vorherigen Füllungsgradzustände, welche einer Nicht- oder Teilbefüllung entsprechen, ragt die Öffnung des Staudruckrohres in einen von Betriebsmittel freien Raum des Stauraumes hinein. In diesem Zustand wird kein Druck oder nur ein sehr geringer Druck über die Staudruckerzeugungs- bzw. erfassungseinrichtung erfasst bzw. ein entsprechendes Drucksignal erzeugt. Dieser geringe Druck entspricht beispielsweise dem Druck, welcher sich in einem, in der Atmosphäre befindlichen unbefüllten und geöffneten Rohr einstellt.
Da in einem Bereich zwischen unbefüllten Zustand der hydrodynamischen Kupplung und dem maximalen Füllungsgrad kein Drucksignal bzw. nur ein sehr geringer Druck erzeugt wird, und erst im Zustand des maximalen Füllungsgrades ein Staudruck entsprechend p_{dynamisch} = ( 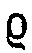 /2)xv² im Stauraum erfasst wird, ist der Zustand des maximalen Füllungsgrades der hydrodynamischen Kupplung leicht und ohne Fehlereinflüsse sofort erkennbar, denn es werden nur die beiden Füllungsgradzustände unterschieden, die sich durch eine starke Druckänderung in Form einer Druckerhöhung unterscheiden. Dieser bzw. das daraus bildbare Drucksignal kann dann zur direkten Ansteuerung einer Stelleinrichtung einer Einrichtung zur wenigstens mittelbaren Beeinflussung der Durchflußmenge im Zulauf zum Arbeitsraum der hydrodynamischen Kupplung, im Einzelnen des Stellgliedes einer Ventileinrichtung, genutzt werden.

Der maximale Füllungsgrad kann einem tatsächlich maximal zulässigen Füllungsgrad, im allgemeinen von 100%, entsprechen. Es ist jedoch auch denkbar, den maximalen Füllungsgrad als einen für einen konkreten Anwendungsfall einzuhaltenden Füllungsgrad zu definieren. Der maximale Füllungsgrad, der dem festlegbar einzuhaltenden Füllungsgrad entspricht, ist dann durch jeden Füllungsgrad kleiner dem tatsächlich maximal zulässigen Füllungsgrad definierbar.

Die Definition des einzuhaltenden Füllungsgrades kann durch Einstellung der Position der Staudruckerzeugungs- bzw. erfassungseinrichtung, insbesondere der Öffnung zur Aufnahme des Betriebsmittels im Stauraum erfolgen. Diese kann durch Verfahren in senkrechter Richtung, d.h. in Einbaulage durch Verfahren in radialer und in Umfangsrichtung im Stauraum oder Verschwenken verändert werden. Als Stellbereich kann dafür der gesamte Umfangsbereich angesehen werden. Die Änderung der Position kann dabei für einen konkreten Einsatzfall fest einstellbar oder aber zusätzlich während des Betriebs anpaßbar erfolgen. Dies bietet den Vorteil, daß mit einem Überfüllschutz verschiedene Anwendungsfälle einer hydrodynamischen Kupplung bestimmter Bauart und Größe durch aktive Anpaßbarkeit an sich ändernde Anforderungen abgedeckt werden können.

Eine vorteilhafte Ausführung besteht darin, auf eine separate Fangrinne zu verzichten und die Betriebsmittelfangrinne zu nutzen. Dies bietet den Vorteil, daß auf bereits vorhandene Bauteile zurückgegriffen werden kann. Bei Anordnung des Staudruckrohres in der Betriebsmittelfangrinne bzw. bei Hineinragen des Staurohrendes in die Betriebsmittelfangrinne, wobei das Staudruckrohr in einem separaten Befüllsegment, welches der Betriebsmittelfangrinne vorgeordnet ist, wird die Erkenntnis genutzt, daß ein Ablaufen aus der Betriebsmittelfangrinne nur solange erfolgt, bis die maximale Füllung, d.h. der Zustand der Vollfüllung noch nicht erreicht ist.

Für die Ausgestaltung des Stauraumes, der im wesentlichen durch die Fangrinne bestimmt wird, und der Zuordnung der Fangrinne zum Arbeitskreislauf ergeben sich eine Vielzahl von Möglichkeiten. Die Fangrinne kann als separates Bauteil, welches mit den entsprechenden Läuferteilen zur Zuordnung zum Arbeitsraum lösbar verbindbar ist, ausgeführt sein. Vorzugsweise wird jedoch die Fangrinne mit einem Schaufelrad als bauliche Einheit, d.h. in einem Stück gefertigt.

Die Staudruckerzeugungs- bzw. erfassungseinrichtung, welche vorzugsweise als Staudruckrohr ausgeführt ist, weist ein, einen Öffnungsbereich tragenden Teil auf. Dieser Teil ist vorzugsweise im wesentlichen parallel gegenüber dem sich im Stauraum einstellenden Betriebsmittelspiegel angeordnet. Eine Anordnung geneigt oder senkrecht dazu ist ebenfalls denkbar. Der Öffnungsbereich erstreckt sich wenigstens zum Teil senkrecht zur radialen Richtung und in Umfangsrichtung, wobei die Drehrichtung zu berücksichtigen ist. Vorzugsweise weist der Öffnungsbereich vollständig in Umfangsrichtung und ist im wesentlichen senkrecht zu dieser angeordnet.

Die erfindungsgemäße Lösung ist bei jeglicher Art von hydrodynamischen Kupplungen mit variabler Füllung einsetzbar. Die Kupplungen können als Einkreislaufkupplungen, welche ein Primär- und ein Sekundärschaufelrad aufweisen, die miteinander einen torusförmigen Arbeitsraum bilden, oder auch als Mehrkreislaufkupplungen, bei welchem eine Mehrzahl von Primär- und Sekundärschaufelrädern eine Vielzahl von Arbeitsräumen bilden, ausgeführt sein. Im erstgenannten Fall kann die Fangrinne sowohl dem Primär- als auch dem Sekundärschaufelrad oder einer Schale zugeordnet werden. Im letztgenannten Fall ist lediglich eine Zuordnung zu einem der Schaufelräder, im allgemeinem dem außen angeordneten Schaufelrädern aufgrund konstruktiver Gegebenheiten möglich.

Die Kopplung zwischen Stauraum und Arbeitsraum kann vielseitig ausgeführt sein. Vorzugsweise erfolgt die Verbindung zwischen dem Innenraum der Fangrinne und dem Arbeitsraum über wenigstens eine im Schaufelrad eingearbeitete Durchgangsöffnung. Die Durchgangsöffnung ermöglicht einen Übertritt von Betriebsmittel aus dem Arbeitsraum in den Stauraum. Die Gestaltung der Durchgangsöffnung kann unterschiedlich ausgeführt sein. Durchgangsöffnungen in Form von Durchgangsbohrungen oder Langlöchern, welche jeweils auf einem bestimmten Durchmesser des Schaufelrades angeordnet sind, sind denkbar. Vorzugsweise werden eine Vielzahl von Öffnungen auf einem Durchmesser in Umfangsrichtung verteilt angeordnet. Eine Anordnung auf unterschiedlichen Durchmessern und/oder eine Kombination der einzelnen Arten von Durchgangsöffnungen ist ebenfalls denkbar.

Die Durchgangsöffnungen können zwischen den einzelnen Schaufeln im Schaufelgrund oder aber in einem radial innerhalb des Schaufelrades liegenden Bereich, welcher frei von der Beschaufelung ist, angeordnet sein.

Je nach Ausführung der Durchgangsöffnung kann die Füllung auch abhängig von der Drehzahldifferenz, d.h. dem Schlupf zwischen dem Primär- und dem Sekundärrad, sein, so daß auch eine zeitliche kurze Überbrückung des Drucksignales erforderlich werden kann.

Vorzugsweise ist das die Öffnung tragende Teil des Staudruckrohres im wesentlichen parallel zum Betriebsmittelspiegel im Stauraum angeordnet. Die Öffnung selbst kann senkrecht oder geneigt zum Betriebsmittelspiegel ausgeführt sein. Eine Unabhängigkeit von der Drehrichtung wird durch das Vorsehen von wenigstens zwei, bezüglich der Ausrichtung des eine Öffnung tragenden Teiles eines Staudruckrohres entgegengesetzt gerichteten Staudruckrohren, welche beispielsweise durch ein Rückschlagventil miteinander gekoppelt sein können, erzielt. Eine andere Ausführungsform sieht zwei Staudruckrohre vor, die jeweils mit einem separaten Druckschalter miteinander gekoppelt sind. Die Staudruckrohre tauchen derart in den durch die Fangrinne und die äußeren Abmessungen des Schaufelrades, welchem die Fangrinne zugeordnet ist, bestimmten Stauraum ein, daß es bei einem maximalen Füllungsgrad einen Staudruck durch Eintauchen des Staudruckrohres in das Betriebsmittel in der Fangrinne erfasst. Dieser maximale Füllungsgrad muß nicht unbedingt der Vollfüllung entsprechen. Ein beliebiger Füllungsgrad, welcher als maximaler Füllungsgrad definiert wird, ist ebenfalls denkbar. Dieser maximale Füllungsgrad kann entsprechend des Einsatzfalles der hydrodynamischen Kupplung definiert werden. Das Staudruckrohr kann zu diesem Zweck verstellbar ausgeführt sein, so daß die Eintauchhöhe in das Betriebsmittel in der Fangrinne variierbar ist. Dies bietet den Vorteil der Realisierung einer einfachen Anpassungsmöglichkeit des Überfüllschutzes an unterschiedliche Anforderungen.

Eine Ausführung des die Öffnung tragenden Bauteiles in radialer Richtung ist ebenfalls denkbar.

Die Fangrinne kann, wie bereits ausgeführt, als separate Rinne am Kupplungsläufer ausgeführt sein, des weiteren besteht jedoch auch die Möglichkeit, die Betriebsmitteleinfuhrrinne, d.h. die zum Zweck des Zulaufes zum Arbeitsraum mit der Zulaufleitung gekoppelte Rinne zu nutzen. Im letztgenannten Fall sind dazu keine weiteren konstruktiven Maßnahmen an den Schaufelrädern der hydrodynamischen Kupplung vorzunehmen, sondern es besteht die Möglichkeit, auf bereits vorhandene Einrichtungen zurückzugreifen.

Das mittels dem Staudruckrohr erzeugte Drucksignal, welches zur Ansteuerung der Stellgliedes einer Einrichtung zur Beeinflussung des Füllungsgrades, insbesondere einer Einrichtung zur Steuerung der Zulaufmenge zum Arbeitsraum genutzt wird, kann in einer übergeordneten Steuer- bzw. Regeleinrichtung verarbeitet werden. Eine andere Möglichkeit besteht in der direkten Ansteuerung des Stellgliedes über die Einrichtung zur Erfassung einer den Füllungsgrad der Kupplung wenigstens mittelbar charakterisierenden Größe. Die Stelleinrichtung wird dahingehend wirksam, daß entweder die Befüllung unterbrochen oder aber reduziert wird. Da im Regelfall das Drucksignal nicht direkt an der Stelleinrichtung wirksam werden wird, ist zwischen der Einrichtung zur Erfassung des Füllungsgrades eine Umwandlungseinrichtung zur Umwandlung des Drucksignales in ein elektrisches Steuersignal erforderlich. Vorzugsweise ist dazu ein Druckschalter vorgesehen.

Die erfindungsgemäße Lösung zur Realisierung eines Überfüllschutzes durch Erkennung der Füllungsgradzustände ist bei jeglicher Art von hydrodynamischen Kupplungen anwendbar. Vorzugsweise erfolgt die Anwendung bei hydrodynamischen Kupplungen, deren Arbeitsräume auch während des Betriebes der Kupplung entleerbar sind.

Zur Realisierung der Funktion Füllungsgradzustandserkennung und der Verwendung des entsprechenden erzeugten Signales, insbesondere Drucksignales zur Ansteuerung der Einrichtung zur Beeinflussung der Betriebsmittelzufuhr zum Arbeitsraum der hydrodynamischen Kupplung ist vorzugsweise eine Steuerungsvorrichtung vorgesehen. Diese umfaßt wenigstens eine Steuereinrichtung, welche wenigstens jeweils einen ersten Eingang und einen ersten Ausgang aufweist. Der erste Eingang der Steuereinrichtung ist dabei mit der Staudruckerzeugungs- bzw. erfassungseinrichtung wenigstens mittelbar koppelbar. Der erste Ausgang der Steuereinrichtung ist wenigstens mittelbar mit der Einrichtung zur Beeinflussung der Betriebsmittelzufuhr zum Arbeitsraum der hydrodynamischen Kupplung koppelbar. Am ersten Eingang wird daher entweder direkt der von der Staudruckerzeugungs- bzw. erfassungseinrichtung erzeugte dynamische Druckwert oder aber ein zu diesem proportionaler Wert, welcher sich hinsichtlich der Dimension vom dynamischen Druckwert unterscheiden kann, als Signal der Steuereinrichtung zugeführt. In der Steuereinrichtung wird beispielsweise entweder dem ermittelten dynamischen Druckwert oder aber einer zu diesem proportionalen Größe eine Stellgröße Y zugeordnet, welche an der Einrichtung zur Beeinflussung der Betriebsmittelzufuhr zum Arbeitsraum wenigstens mittelbar wirksam wird. Dabei wird im einfachsten Fall vorzugsweise lediglich dem Eingangssignal an der Steuereinrichtung, welche dem zweiten erhöhten Druckwert entspricht, eine Stellgröße zugeordnet. Die Steuereinrichtung fungiert dabei als einfache Umwandlungsvorrichtung, d.h. diese ordnet einem Eingangssignal entweder eine Stellgröße zu oder nicht. Die Stellgröße Y, welche am Ausgang der Steuereinrichtung ausgegeben wird, kann dabei entweder direkt an einer Betätigungseinrichtung der Einrichtung zur Beeinflussung der Betriebsmittelzufuhrmenge zum Arbeitsraum der hydrodynamischen Kupplung oder aber mittelbar, d.h. indirekt an dieser Betätigungseinrichtung wirksam werden. Bei der Stellgröße Y kann es sich dabei um eine elektrische, eine hydraulische oder pneumatische oder aber eine mechanische Größe handeln.

Diese von der Steuervorrichtung ausgeführten Funktionen können entweder durch die entsprechende Auswahl von Bauelementen und deren Koppelung oder über eine entsprechende Mikroprozessorsteuerung realisiert werden.

Zur Erfüllung der Grundfunktion, d.h. der Füllungsgradzustandserkennung und der Ansteuerung der Einrichtung zur Beeinflussung der Betriebsmittelzufuhrmenge zum Arbeitsraum der hydrodynamischen Kupplung können dazu beispielsweise wenigstens zwei Druckschalteinrichtungen vorgesehen werden. Je eine Druckschaltvorrichtung ist dabei einer Drehrichtung der Kupplung und damit einem Öffnungsbereich an der Staudruckerzeugungs- bzw. erfassungseinrichtung zugeordnet. Die Druckschalter übernehmen die Aufgabe, die Betätigungseinrichtung der Einrichtung zur Beeinflussung der Betriebsmittelzufuhrmenge zum Arbeitsraum der hydrodynamischen Kupplung elektrisch anzusteuern. Jede Druckschaltvorrichtung umfaßt dazu einen Schalter, welcher die entsprechende Kopplung realisiert. In der ersten Schaltposition des Schalters der Druckschalteinrichtung, in der Regel bei Anliegen eines Füllsignales, wird die Betätigungseinrichtung der Einrichtung zur Beeinflussung der Betriebsmittelzufuhrmenge zum Arbeitsraum derart angesteuert, daß Betriebsmittel zum Arbeitsraum gelangen kann. Die Freigabe der Zufuhrleitung zum Arbeitsraum kann dabei auch stufenlos erfolgen. Aufgrund des Drucksignales von der Staudruckerzeugungs- bzw. erfassungseinrichtung wird der Schalter in eine zweite Schaltposition verbracht. In dieser zweiten Schaltposition wird die Einrichtung zur Beeinflussung der Betriebsmittelzufuhrmenge zum Arbeitsraum der hydrodynamischen Kupplung in eine Schaltposition gebracht, in welcher die Betriebsmittelzufuhr zum Arbeitsraum reduziert oder unterbrochen wird.

Diese direkte Ausführung der Koppelung zwischen den einzelnen Druckschaltvorrichtungen und der Betätigungseinrichtung der Einrichtung zur Beeinflussung der Betriebsmittelzulaufmenge zum Arbeitsraum der hydrodynamischen Kupplung stellt die minimal erforderliche Ausrüstung zur Realisierung der Steuerungsaufgabe des Überfüllschutzes dar. Zusätzlich dazu kann im Schaltschema eine Verriegelung vorgesehen werden, welche einen Kurzschluß auf die Leitung, welche die Einrichtung zur Beeinflussung der Zulaufmenge mit dem Arbeitsraum verbindet, eventuell abschalten kann, d.h. die Betätigungseinrichtung wird nicht mehr elektrisch beaufschlagt.

Die Schalter der Druckschaltvorrichtung werden direkt über den mit der Staudruckerzeugungs- bzw. erfassungseinrichtung erzeugten Staudruck angesteuert. Dies bedeutet, daß entweder direkt der Staudruck am Schalter wirksam wird und diesen betätigt, oder aber eine zum Staudruck proportionale Größe. Vorzugsweise wird jedoch die erstere Möglichkeit realisiert.

Eine bevorzugte weitere Ausführung der vorrichtungsgemäßen Ausgestaltung der Steuervorrichtung enthält wenigstens jeweils eine Verzögerungseinrichtung in Form eines Verzögerungsrelais, welche den einzelnen Druckschaltvorrichtungen nachgeschaltet ist. Dies bedeutet, daß die Einrichtung zur Beeinflussung der Betriebsmitteizufuhrmenge zum Arbeitsraum der hydrodynamischen Kupplung, d.h. das Füllventil, bei Auftreten eines entsprechenden, dem maximalen Füllungsgrad entsprechenden Signales, mit einer bestimmten Zeitdauer verzögert geschaltet wird, um eine Überfüllen bei einem kurzfristigen betriebsbedingten Abfallen des Druckes am Druckschalter zu verhindern. Die Zeitdauer wird dabei möglichst gering gewählt. Vorzugsweise werden Zeitdauern von >0 bis 5 Sekunden realisiert. Diese Zeitdauer kann entweder entsprechend dem Einsatzfall einstellbar sein oder aber bereits durch Auslegung der Verzögerungseinrichtungen fest vorgegeben werden. Zusätzlich können für zusätzliche Schalt- und Sicherheitsfunktionen auch die Schließerfunktionen von Druckschaltern verwendet werden.

Eine Ausführung mit Verzögerungseinrichtung wird jedoch bei Kupplungen mit geregeltem Kühlmittelumlauf vorzugsweise nicht realisiert, da die Regelung negativ beeinflußt werden könnte.

Es besteht die Möglichkeit, die Druckschaltvorrichtungen auch direkt in Reihe zum Füllventil zu schalten, jedoch wird dabei schon bei kurzem Druckabfällen an der Druckschaltvorrichtung die Einrichtung zur Beeinflussung der Betriebsmittelmenge im Arbeitsraum der hydrodynamischen Kupplung betätigt und damit Betriebsmittel in den Arbeitsraum nachgefüllt.

Zum Anfahren einer Arbeitsmaschine darf die hydrodynamische Kupplung beispielsweise nur so lange gefüllt werden, bis an einem der beiden Druckschaltvorrichtungen ein Signal anliegt. Sollte der Arbeitsraum jedoch trotzdem noch nicht ganz gefüllt sein, das bedeutet, das Signal von der Staudruckerzeugungs- bzw. erfassungseinrichtung fällt nach einer gewissen Zeitdauer wieder ab, wird automatisch eine Nachfüllung vorgenommen.

Zur Realisierung einer definierten Füllung der Kupplung, d.h. eines vorgegebenen Füllungsgrades, wird die Einrichtung zur Beeinflussung der Zulaufmenge zum Arbeitsraum, das sogenannte Füllventil, so lange während des Anfahrvorganges geöffnet, bis die Druckschaltvorrichtung anspricht. Danach wird der Nennbetriebspunkt abgewartet und eventuell eine Nachfüllung bei Abfallen des Signales von der Staudruckerzeugungs- bzw. erfassungseinrichtung auf den ersten Druckwert vorgenommen. Zusätzlich wird das Entleerventil, d.h. die Einrichtung zur Beeinflussung der Ablaufmenge aus dem Arbeitsraum, getaktet geöffnet, bis die Druckschaltvorrichtung die Einrichtung zur Beeinflussung der Zulaufmenge nicht mehr ansteuert. Das Füllventil wird taktweise wieder betätigt, bis die Füllstandserkennung wieder anspricht, d.h. die Staudruckerzeugungs- bzw. erfassungseinrichtung den zweiten Druckwert erzeugt. Durch ständige Überwachung des Füllungsgrades und durch ständige Reaktion auf den Füllungsgrad wird sichergestellt, daß der gewünschte definierte Füllungsgrad eingestellt wird. Der definierte und zu ermittelnde Füllungsgrad hängt jedoch von der Stellung der Staudruckerzeugungs- bzw. erfassungseinrichtung, insbesondere dem Öffnungsbereich im Stauraum ab. Die Position der Staudruckerzeugungs- bzw. erfassungseinrichtung im Stauraum bzw. deren Öffnungsbereich gegenüber dem Stauraum legt dabei jeweils einen fest definierten maximal zulässigen Füllungsgrad fest. Dieser entspricht im allgemeinen den maximal zulässigen Füllungsgrad von 100 %, kann jedoch aber auch einen bestimmten Teilfüllungsgrad beschreiben. Denkbar ist auch eine Einstellbarkeit des maximal zulässigen Füllungsgrades indem die Staudruckerzeugungs- bzw. erfassungseinrichtung im Stauraum verstellbar angeordnet wird.

Bei Kupplungsausführungen, bei welchen dem Arbeitsraum ein Kühlmittelkreislauf während des Dauerbetriebes zum Zwecke der Kühlung zugeordnet ist, d.h. ein Teil des Betriebsmittels wird während des Betriebes aus dem Arbeitsraum abgegeben und über einen Kreislauf diesem wieder zugeführt, und diesem Kreislauf jeweils separat eine Zu- und eine Ablaufleitung zum Zwecke der volumetrischen Kühlung zuschaltbar sind, beispielsweise über entsprechende Ventileinrichtungen, wird nach Ansprechen der Temperaturüberwachung für den Betriebsmittelaustausch zunächst das Entleerventil im Auslaß aus dem Arbeitsraum der hydrodynamischen Kupplung geöffnet und nach einer einstellbaren Zeitdauer, welche auch gleich Null sein kann, auch das Füllventil zugeschaltet. In diesem Fall wird dem Arbeitskreislauf Betriebsmittel entnommen und gleichzeitig oder mit geringem zeitliches Versatz neues gekühltes Betriebsmittel zugeführt. Spricht während dieses Betriebsmittelaustausches das Signal für die Füllungsgradzustandserkennung an, d.h. wird ein zweiter erhöhter Druckwert an der Staudruckerzeugungs- bzw. erfassungseinrichtung erzeugt, wird die Einrichtung zur Beeinflussung der Zulaufmenge zum Arbeitsraum, d.h. das Füllventil für die noch eingestellte Zeit geschlossen, um ein Überfüllen zu verhindern. Ist die Temperatur unter einen zulässigen Grenzwert gefallen, wird die Kupplung wieder, wie beim Anfahren definiert, gefüllt, d.h. die Einrichtung zur Beeinflussung der Betriebsmittelzufuhrmenge zum Arbeitsraum wird so geschaltet, daß die Betriebsmittelversorgung mit dem Arbeitsraum gekoppelt ist, wobei nach Auftreten eines Signales für den zweiten Druckwert an der Zustandserkennungseinrichtung das Füllventil wieder geschlossen wird.

Zur Realisierung der einzelnen Steuerungsaufgaben können zusätzlich die Anlaufzeit, die Leistungsaufnahme als Funktion der Zeit, die Betriebsmediumstemperatur zu Stör- oder Warnungsmeldungen führen, die als weitere Eingangsgrößen zur Ansteuerung der Betätigungseinrichtungen der einzelnen Ventile mit berücksichtigt werden müssen. Des weiteren kann auch die Kupplungsfüllzeit zu einer Meldung führen, wenn ein bestimmter vordefinierbarer Wert überschritten wird.

Die Ventileinrichtungen zur Beeinflussung des freizugebenden Querschnittes in der Zu- bzw. Auslaßleitung des Arbeitsraumes können mechanisch, elektromotorisch, elektromagnetisch, hydrosta- oder pneumatisch betätigt werden. Zur Ansteuerung der Betätigungseinrichtungen ist dabei zwischen Staudruckerzeugungs- bzw. meßeinrichtung und Betätigungseinrichtung wenigstens eine Signalumwandlungseinrichtung vorzusehen.

Die erfindungsgemäße Lösung der Aufgabe ist nachfolgend anhand von Figuren erläutert. Darin ist im übrigen folgendes dargestellt:
- Figuren 1a und 1b: zeigen eine erfindungsgemäße Ausführung einer hydrodynamischen Kupplung mit Überfüllschutz am Beispiel einer Kupplung mit zwei Arbeitskreisläufen und ein Diagramm zur Verdeutlichung der Funktionsweise des Überfüllschutzes;
- Figuren 2a und 2b: verdeutlichen anhand einer Ausführung aus dem Stand der Technik und einem Diagramm die Problematik der Verwendung eines im Kreislauf erfaßten Druckwertes zur Ansteuerung des Füllventiles;
- Figuren 3a und 3b: verdeutlichen erfindungsgemäße Ausführungen einer Fangrinne-Staudruckrohr-Anordnung;
- Figuren 4a bis 4b: verdeutlichen konkrete Ausführungen erfindungsgemäß gestalteter Fangrinne-Staudruckrohr-Anordnungen;
- Figuren 5a und 5b: verdeutlichen eine Ausführung des Anschlusses von Leitungen an das Staudruckrohr;
- Figuren 6a und 6b: verdeutlichen Ausführungen zur Druckwerteerfassung im Bereich der Betriebsmittelfangrinne;
- Figuren 7a bis 7d: verdeutlichen anhand vereinfachter Steuerschemas die vorrichtungsmäßige Ausgestaltung zur Realisierung der Steuerfunktionen;
- Figuren 8a und 8b: verdeutlichen anhand von Signalflußbildern die Funktionsweise während des Anfahrvorganges und während der Kühlung am Beispiel der volumetrischen Kühlung im Dauerbetrieb;
- Figur 9: verdeutlicht anhand von Diagrammen die in der Figur 8a beschriebene Funktionsweise.

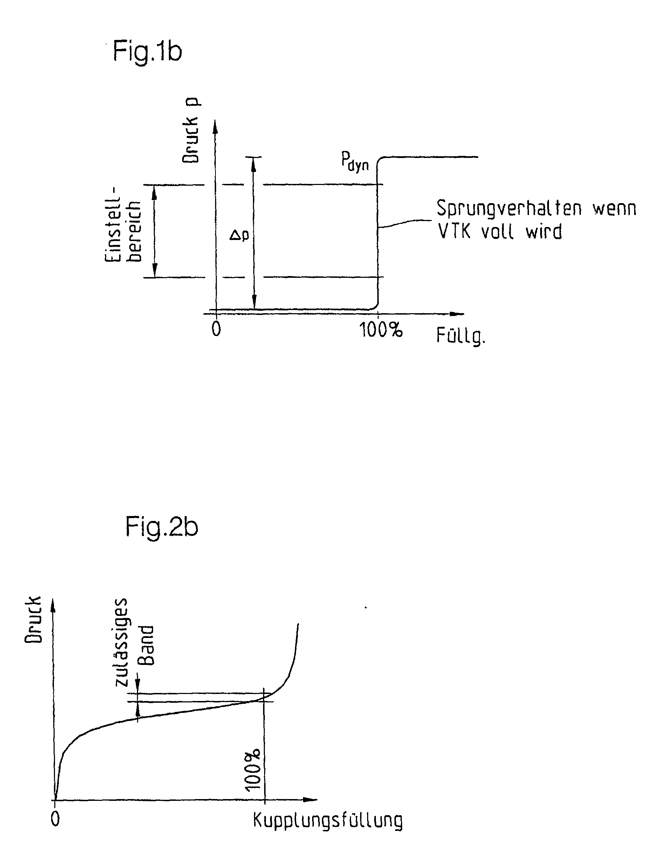

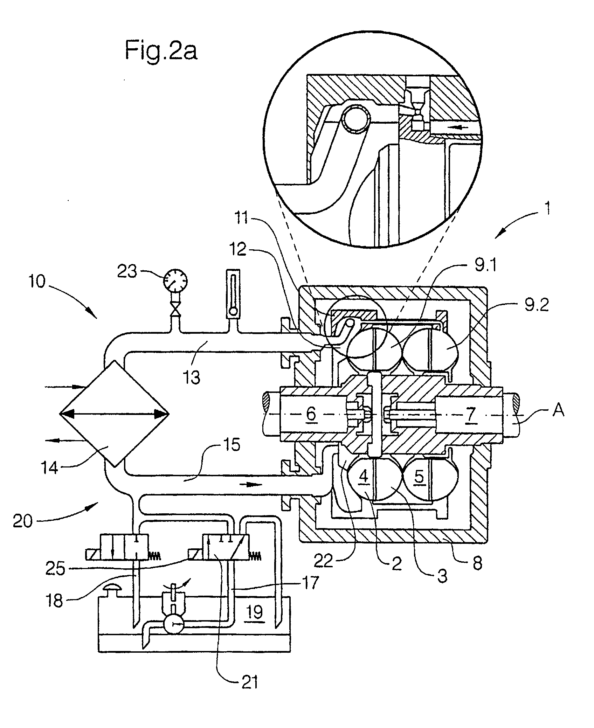

Zur Verdeutlichung der Problematik der Ausführungen gemäß des Standes der Technik sind in die Figuren 2a und 2b das Funktionsschema einer gattungsgemäßen hydrodynamischen Kupplung, hier am Beispiel einer Kupplung mit zwei Arbeitskreisläufen und zugeordnetem geschlossenen Betriebsmittelkühlkreislauf, sowie eine Kennlinie zur Darstellung der Abhängigkeit des momentanen Druckes p in den Ablaufleitungen vom Füllungsgrad der Kupplung dargestellt.

Die Figur 2a verdeutlicht in vereinfachter Darstellung ein Funktionsschema einer aus dem Stand der Technik bekannten gattungsgemäßen hydrodynamischen Kupplung 1, welche als Doppelkreislaufkupplung mit geschlossenem Betriebsmittelumlauf in einem geschlossenem Kühlkreislauf ausgeführt ist. Diese Kupplung 1 umfaßt dazu im dargestellten Fall zwei Schaufelräder, ein Primärschaufelrad 2 und sein Sekundärschaufelrad 3, welche miteinander wenigstens zwei torusförmige Arbeitsräume 4 und 5 bilden. Das Primärschaufelrad 2 ist über ein Antriebswelle 6 wenigstens mittelbar mit einer hier im einzelnen nicht dargestellen Antriebsmaschine koppelbar. Das Sekundärschaufelrad ist mit einer Abtriebswelle 7 zur Kopplung mit der Abtriebsseite drehfest verbindbar.

Die beiden torusförmigen Arbeitsräume 4 und 5 sind mit einem Betriebsmittel befüllbar. Als Betriebsmittel können dabei Öl oder Wasser verwendet werden. Das Betriebsmittel wird im Betrieb der hydrodynamischen Kupplung als Drehmomentenübertragungseinrichtung in den torusförmigen Arbeitsräumen 4 und 5 umgewälzt und bildet somit zwischen den beiden Schaufelrädern, dem Primärschaufelrad 2 und dem Sekundärschaufelrad 3 jeweils einen geschlossenen Arbeitskreislauf 9.1 und 9.2.

Zur Abfuhr der in den Arbeitskreisläufen 9.1 und 9.2 anfallenden Wärme ist dem Arbeitskreislauf ein Kühlmittelkreislauf 10 zugeordnet. Das Betriebsmittel wird über hier im einzelnen nicht dargestellte Öffnungen im Bereich des äußeren Durchmessers D_{AS} der Primärschaufelräder während des Betriebes der hydrodynamischen Kupplung 1 in eine drehfest mit dem Primärschaufelrad 2 gekoppelten Pumpschale 11 abgegeben. Die Pumpschale 11 ist dabei in radialer Richtung bezogen auf die Kupplungsachse A im Bereich des äußeren Umfanges U_{AS} der beiden Schaufelräder 2 und 3 angeordnet. In der Pumpschale 11 wird das Betriebsmittel von wenigstens einem, gegen die Drehrichtung stehenden Staudruckrohr 12 aufgenommen. Zu diesem Zweck ragt dieses in Einbaulage der hydrodynamischen Kupplung 1 oberhalb der Kupplungsachse A in die Pumpschale 11 hinein. Dieses Staudruckrohr 12 ist Bestandteil des Kühlmittelkreislaufes 10 und mündet in eine Leitung 13, welche als Auslaßleitung aus der Pumpschale 11 und gleichzeitig als Zulaufleitung zu einer Kühleinrichtung 14, welche als Kühler oder als Wärmetauscher ausgeführt sein kann, fungiert. Die Kühleinrichtung 14 ist über eine Leitung 15 mit einer Betriebsmitteleinfuhrrinne 16 zu den Arbeitsräumen 4 bzw. 5 verbunden. Im dargestellten Fall handelt es sich bei dem Kühlmittelkreislauf 10 um einen geschlossenen Kreislauf. Der Leitungsverlauf dieses Kreislaufes 10 kann auch zur Befüllung und Entleerung der torusförmigen Arbeitsräume 4 bzw. 5 genutzt werden. Zu diesem Zweck sind den Arbeitsräumen 4 bzw. 5 wenigstens mittelbar über den Kühlmittelkreislauf 10 eine Zufuhrleitung 17 und eine Abführleitung 18, welche mit einem Betriebsmitteltank 19 gekoppelt sind, zugeordnet. Die Zuschaltbarkeit dieser einzelnen Leitungen, hier der Zufuhrleitung 17 und der Abführleitung 18 erfolgt über entsprechende Vorrichtungen in Form von Ventileinrichtungen. Die Zuschaltung der Ablaufleitung 18 erfolgt mittels einem als Entleerventil fungierenden Schaltventil, beispielsweise in Form eines 2/2-Wege-Ventils 20. Die Zuschaltung der Zulaufleitung 17 erfolgt über ein als Füllventil fungierendes Schaltventil in Form eines 3/2-Wege-Ventiles 21.

Im stationären Zustand befindet sich immer eine konstante Menge Betriebsmittel in der Kupplung 1, d.h. in den beiden torusförmigen Arbeitsräumen 4 bzw. 5 und im Kühlmittelkreislauf 10. Diesem Kühlmittelkreislauf 10 wird dann keine Flüssigkeit zugeführt oder entnommen. Eine Erhöhung oder Verminderung der Drehzahl der Arbeitsmaschine wird erreicht, indem der Kupplung durch Füll- oder Entleerventile, hier über die Zuschaltung der einzelnen Zuführ- und Abführleitungen 17 und 18 Betriebsmittel zugeführt oder entnommen werden kann. Die Befüllung erfolgt über die Zuführleitung 17 aus einem Betriebsmitteltank 19, in die Zulaufleitung 15, welche über eine Betriebsmitteleinfuhrrinne 16 mit dem torusförmigen Arbeitsräumen 4 bzw. 5 gekoppelt ist. Die Beeinflussung der Füllmenge erfolgt dabei über das 3/2-Wege-Ventil 21, welches in einer ersten Schaltstellung I₂₁ die Zufuhrleitung 15 zur Betriebsmitteleinfuhrrinne 16 von der Zulaufleitung 17 entkoppelt und in einer zweiten Schaltstellung II₂₁ die Zulaufleitung 17 mit der Zufuhrleitung 15 verbindet.

Zur Vermeidung der Überschreitung eines maximal zulässigen Füllungsgrades der hydrodynamischen Kupplung 1, insbesondere der Arbeitsräume 4 bzw. 5 ist der Ablaufleitung, insbesondere der Leitung 13 im Kühlmittelkreislauf 10, in welchem während des Betriebes zur Wärmeabfuhr ein Teil des Betriebsmittels aus dem Arbeitskreislauf 9.1 bzw. 9.2 über einen Kühler wieder zurück in den Arbeitskreislauf geführt wird, eine Einrichtung zur Erfassung des Druckes p zugeordnet. Diese Einrichtung ist hier mit 23 bezeichnet. Während des Betriebes der hydrodynamischen Kupplung 1 baut sich mit zunehmender Drehzahl der Antriebsmaschine durch Abgabe des Betriebsmittels in die Pumpschale 11 ein sich zunehmend erhöhender Druck p auf. Dieser Druck p, welcher dann im Kühlmittelkreislauf 10, insbesondere in der Leitung 13 anliegt, wird zur Realisierung eines Überlastschutzes verwendet. Dabei wird bei der Ausführung aus dem Stand der Technik die Erkenntnis genutzt, daß bei Überschreitung des zulässigen maximalen Füllungsgrades der Druck p in der Leitung 13 ebenfalls erhöht wird. Dieser Druck wird abgegriffen und als Stellsignal zur Ansteuerung einer Stelleinrichtung 25 am 3/2-Wege-Ventil 21 genutzt. Über den Druck wird somit die Zufuhr von Betriebsmittel aus dem Betriebsmitteltank 19 über die Zulaufleitung 17 zur Betriebsmitteleinfuhrrinne 16 an der hydrodynamischen Kupplung 1 gesteuert. Die Ansteuerung selbst erfolgt in der Regel elektromagnetisch, d.h. das Drucksignal muß über eine Wandlungseinrichtung in ein entsprechendes elektrisches Stellsignal umgewandelt werden. Die Funktion der Umwandlung wird von einem, hier im einzelnen nicht dargestellten Druckschalter ausgeführt. Dieser muß jedoch bei Inbetriebnahme exakt eingestellt werden und ist zudem den Druckspitzen durch das geöffnete 3/2-Wege-Ventil 21 ausgesetzt.

In der Figur 2b ist dazu ein Diagramm, in welchem der Druck p in Abhängigkeit von der Kupplungsfüllung bzw. vom Füllungsgrad in % aufgetragen ist, dargestellt. Daraus ist ersichtlich, daß erst ab einer Kupplungsfüllung, welche dem maximalen Füllungsgrad entspricht, der in der Regel 100 % beträgt, eine Änderung der Druckwerte in den Leitungen dahingehend zu verzeichnen ist, daß die Druckwertkurve einen vergrößerten Anstieg aufweist. Im Bereich eines Kupplungsfüllungsgrades von 0% bis 100 % nimmt der erzeugte Druck p im Leitungssystem im wesentlichen stetig zu.

Diese stetige Zunahme ist auch noch im Bereich des maximal zulässigen Kupplungfüllungsgrades von 100% vorliegend. Erst ab diesem Füllungsgrad, d.h. bei einer Überfüllung, ändert sich der Druck p dahingehend, daß eine steilere Zunahme bzw. ein stärkeres Ansteigen zu verzeichnen ist. Um bereits bei Vollfüllung aktiv reagieren zu können, ist das Verbindungsglied zwischen der Einrichtung zur Erfassung des Druckes p und dem Stellglied zur Beeinflussung der Zulaufmenge zur hydrodynamischen Kupplung hinsichtlich seiner Reaktion auf einen geringen Bereich beschränkt. Nur bei Auftreten eines Druckes p mit einer Größe, der im angegebenen Bereich liegt, erfolgt eine Ansteuerung der Stelleinrichtung. Dieser Druckwert muß jedoch möglichst genau von der Erfassungseinrichtung ermittelt werden. Zusätzliche Störgrößen, welche den Druckwert im System beeinflussen können, können dabei bereits das zu ermittelnde Ergebnis verfälschen. Mit einem derartigen System ist es daher schwierig, den Zeitpunkt der Kupplungsvollfüllung, d.h. des maximal zulässigen Füllungsgrades, exakt zu ermitteln und gleichzeitig durch schnelle Reaktion, insbesondere durch Ansteuerung des Stellgliedes zur Beeinflussung der Zulaufmenge zu den Arbeitsräumen ein Überfüllen zu vermeiden. Diese Ansteuerung arbeitet somit sehr ungenau und ist sehr fehlerbehaftet.

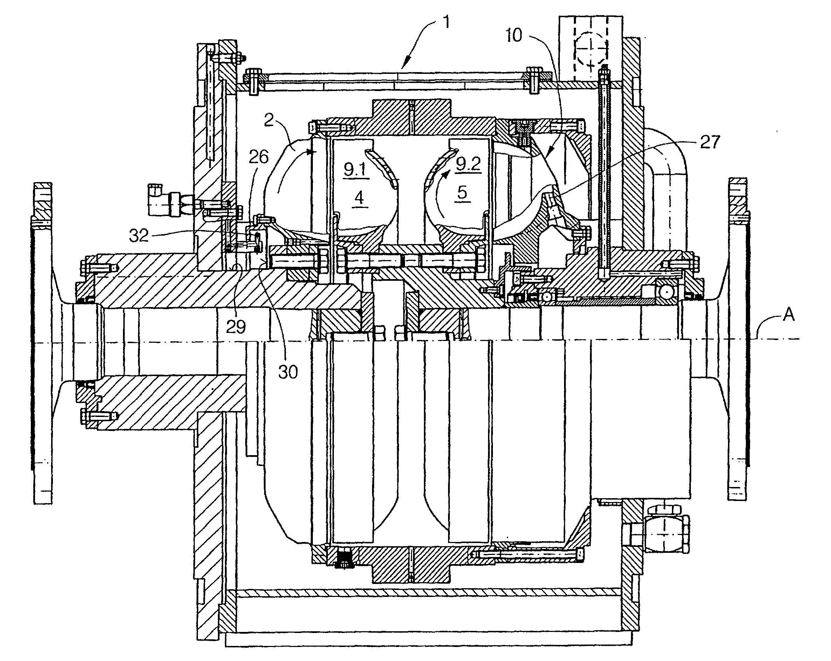

In der Figur 1 ist eine erfindungsgemäße Lösung zur Realisierung des Überfüllschutzes anhand einer hydrodynamischen Kupplung, wie in Figur 2 beschrieben, dargestellt. Der Grundaufbau der hydrodynamischen Kupplung 1 entspricht dabei im wesentlichen dem, wie in der Figur 2a beschrieben. Für gleiche Elemente werden daher gleiche Bezugszeichen verwendet.

Die hydrodynamische Kupplung 1 umfaßt auch hier einen dem Arbeitskreislauf zugeordneten Kühlkreislauf 10, sowie den Arbeitsräumen 4 bzw. 5 zugeordnete Zulauf- bzw. Ablaufleitungen 17 bzw. 18. Erfindungsgemäß ist dem Arbeitsraum bzw. den Arbeitsräumen 4 bzw. 5 eine sogenannte Fangrinne 26 zugeordnet, welche vorzugsweise in Umlaufrichtung der hydrodynamischen Kupplung 1 verläuft und sich bezogen auf die Kupplungsachse A in radialer Richtung in einem Bereich angeordnet ist, welcher bezogen auf die Abmessungen in radialer Richtung sich maximal über den maximalen Durchmesser des Arbeitsraumes 4 bzw. 5 erstreckt. Diese Fangrinne 26 ist mit dem Arbeitsraum 4 bzw. 5 in kommunizierender Weise verbunden. Die Verbindung erfolgt beispielsweise in Form einer Durchgangsöffnung 27, welche verschiedenartig ausgeführt sein kann und in radialer Richtung in einem Bereich zwischen einem äußeren Durchmesser der Rinne dᵣₐ, welcher der radial äußeren Begrenzung der Fangrinne 26 enspricht, und dem, die Fangrinne in radialer Richtung mit dem kleinsten Durchmesser begrenzenden Bereichen, beispielsweise den Flächen 29 und 30 in das Primärschaufelrad 2 eingearbeitet ist. Die Durchgangsöffnungen 27 können entweder im schaufelfreien, radial innenliegenden Bereich des Primärschaufelrades 2 oder aber vorzugsweise im Schaufelgrund des beschaufelten Teiles 31 des Primärschaufelrades 2 angeordnet sein. Die Anordnung der Fangrinne 26 und der Durchgangsöffnung 27 gegenüber dem Schaufelrad ist dabei abhängig von der gewünschten Befüllung in Abhängigkeit des Füllungsgrades der Kupplung 1. Die Durchgangsöffnungen 27 können dabei als Durchgangsbohrungen, welche in kreisrunder Form oder aber in Form von Langlöchern ausgeführt sind, welche sich vorzugsweise über wenigstens einen Teil des Umfanges des Schaufelrades auf einem bestimmten Durchmesser erstrecken, ausgeführt sein.

Der Füllungsstand in dem durch die Fangrinne 26 beschriebenen Stauraum 40, welcher durch den Füllungsgrad in der hydrodynamischen Kupplung 1, insbesondere den Arbeitsräumen 4 bzw. 5 und die Gestaltung der Durchgangsöffnungen 27 bestimmt wird, wird mittels eines Staudruckrohres 32 abgegriffen. Das Staudruckrohr 32 ist dabei derart ausgeführt und angeordnet, daß eine Befüllung mit Flüssigkeit erst ab einem Füllstand 34 in der Fangrinne 26 erfolgt, welcher einem maximal zulässigen Füllungsgrad in den Arbeitsräumen 4 bzw. 5 entspricht. Durch die Füllung des Staudruckrohres 32 wird ein sogenannter Staudruck p_{dynamisch} erfasst, welcher einem zweiten, gegenüber einem ersten Druckwert p₁ ohne Befüllung des Staudruckrohres 32 mit Betriebsmittel erhöhten Druckwert p₂ entspricht, als Stellgröße für die Beaufschlagung des 3/2-Wegeventils 21 zur Beeinflussung der Zufuhrmenge an Betriebsmittel zum Arbeitskreislauf 9.1 bzw. 9.2 dient. Der maximal zulässige Füllungsgrad entspricht dabei vorzugsweise einem maximalen Füllungsgrad von 100 %.

Bei Teilbefüllung, d.h. einem Füllungsgrad geringer als der maximal zulässige Füllungsgrad erfolgt zwischen der Fangrinne 26 und den Arbeitsräumen 4 bzw. 5 ebenfalls ein Betriebsmittelaustausch, allerdings wird kein Staudruck p_{dynamisch} oder nur ein vernachläßigbar geringer Druck p₁ im Staudruckrohr 32 erfasst. In diesem Fall wird kein Signal zur Beaufschlagung der Stelleinrichtung des 3/2-Wegeventiles 21 abgegeben. Lediglich bei Erreichen der maximal zulässigen Füllmenge wird dieses Signal erzeugt.

Die maximal zulässige Füllmenge kann dabei durch die obere Befüllungsgrenze, einem Füllungsgrad von 100% bestimmt werden, oder aber frei wählbar zwischen einem Füllunggrad von 0% und 100% sein. Entsprechend des Füllungsgrades ist immer die Öffnung des Staudruckrohres 32 im mit Betriebsmiitel befüllbaren und einen Betriebsmittelstand 34 erreichenden Stauraum 40 anzuordnen.

In der Figur 1b ist zu der erfindungsgemäßen Ausführung die Abhängigkeit der ermittelten Staudruckwerte von der Kupplungsfüllung in einem Diagramm aufgetragen. Daraus wird ersichtlich, daß bei Teilfüllung, d.h. einem Betriebszustand der hydrodynamischen Kupplung 1, bei welchem der Flüssigkeitsstand 34 im Stauraum 40 der Fangrinne 26 unterhalb des Staudruckrohres 32 liegt, ein Druckwert p im Staudruckrohr 32 ermittelt wird, welcher im wesentlichen dem Luftdruck entspricht. Erst bei Eintauchen des Staudruckrohres 32 in das im Stauraum 40 befindliche Betriebsmittel und der Erfassung eines dynamischen Staudruckes von p_{dyn} = ( 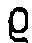 /2)xv², wobei das Eintauchen des Staudruckrohres 32 in das in der Fangrinne 26 befindliche Betriebsmittel erst bei einem bestimmten Füllungsgrad, beispielsweise von 100 % erfolgt, wird sprungartig ein zweiter Druckwert p bzw. eine starke Druckwertänderung Δp im Staudruckrohr ermittelt, welche als Erkennungsmerkmal für das Erreichen des maximal zulässigen Füllungsgrades im Arbeitsraum 4 bzw. 5 verwendet wird. Wesentlich ist dabei der im Diagramm ersichtliche ausgeprägte Signalsprung, welcher eine Größe aufweisen sollte, die auch unter dem Einfluß von Störgrößen erkennbar ist.

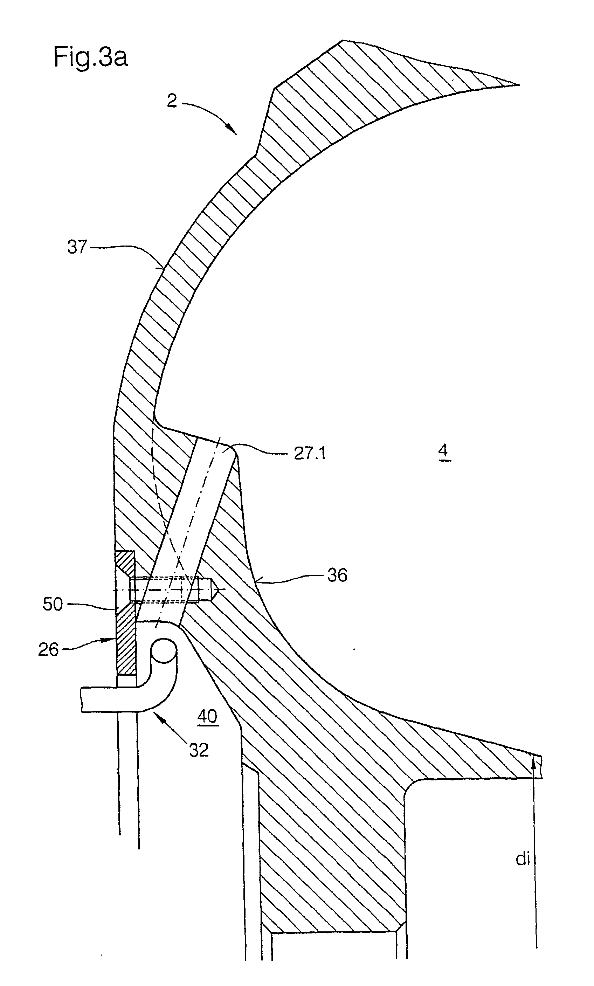

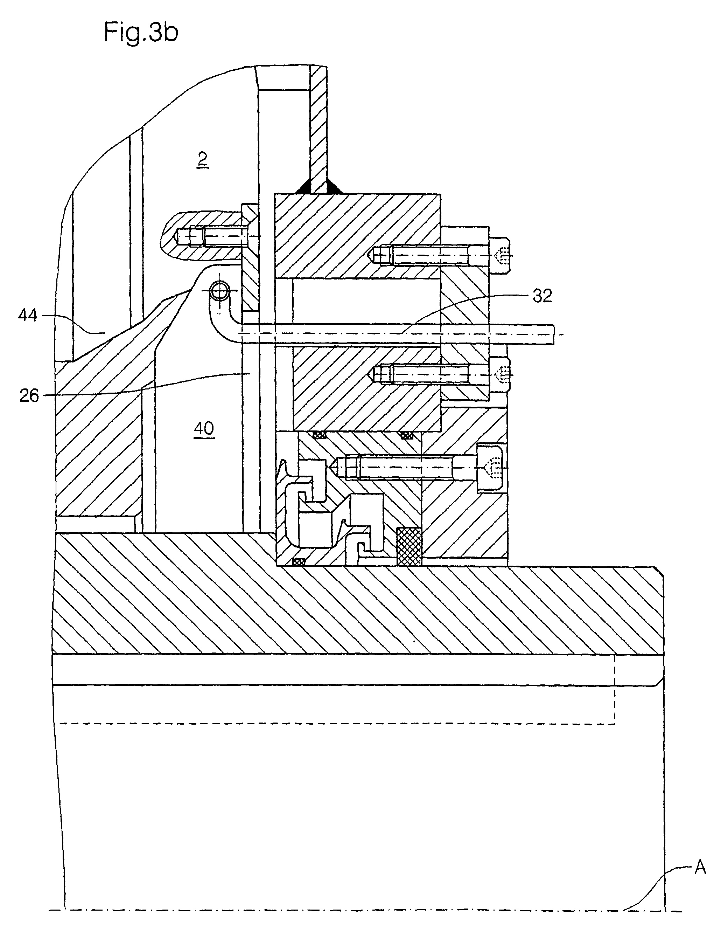

Die Figuren 3a und 3b verdeutlichen in einem Ausschnitt aus einem Schaufelrad, vorzugsweise dem Primärschaufelrad 2, jeweils eine weitere Möglichkeit der Gestaltung der Verbindung zwischen dem Arbeitsraum, hier dem Arbeitsraum 4, und der Fangrinne 26 und dem durch die Fangrinne 26 und der Außenkontur 37 des Primärschaufelrades bestimmten Stauraum 40.

Die Figur 3a zeigt einen Ausschnitt aus einem Primärschaufelrad 2, welchem eine Fangrinne 26 zugeordnet ist. Die Fangrinne 26 wird von einem scheibenförmigen Element 50 gebildet, welches mit dem Primärschaufelrad 2 lösbar verbindbar ist. Die Außenkontur 37 des Primärschaufelrades und die Fangrinne bilden einen Stauraum 40. In diesen Stauraum 40 ragt eine Einrichtung zur Erfassung einer, dem Füllungsgrad wenigstens mittelbar charakterisierenden Größe in Form eines Staudruckrohres 32.

Die Fangrinne 26 erstreckt sich in radialer Richtung bis in einen Bereich, welcher im Bereich des Arbeitsraumes 4 bzw. auf dessen Höhe liegt. Die Verbindung zwischen dem Stauraum 40 und dem Arbeitsraum 4 erfolgt über eine schräg ausgeführte Durchgangsöffnung 27.1, welche sich vom Schaufelradgrund 36 bis zur Schaufelradaußenseite 37 erstreckt, welche gleichzeitig eine äußere Begrenzungsfläche für die Fangrinne 26 bildet.

Der Stauraum 40 ist in der dargestellten Ausführung in radialer Richtung in einem Bereich angeordnet, der der radialen Anordnung der Beschaufelung 44 entspricht.

In der Figur 3b sind Ausführungen einer Fangrinne 26 und eines Stauraumes 40 dargestellt, welche in radialer Richtung im radial inneren Bereich des Primärschaufelrades 2 angeordnet sind. Dabei ist die Fangrinne 26 in einem, in radialer Richtung innenliegenden Bereich der Beschaufelung 44 des Primärschaufelrades 2 angeordnet. In Einbaulage erfolgt die Anordnung des Staudruckrohres 32 in Abhängigkeit des zu begrenzenden Füllungsgrades, im dargestellten Fall oberhalb der Kupplungsachse A.

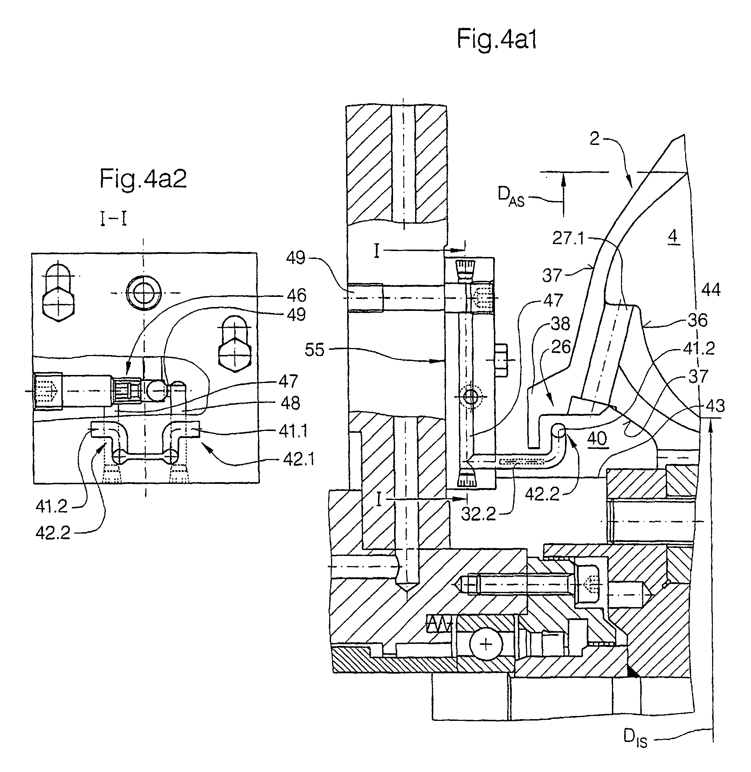

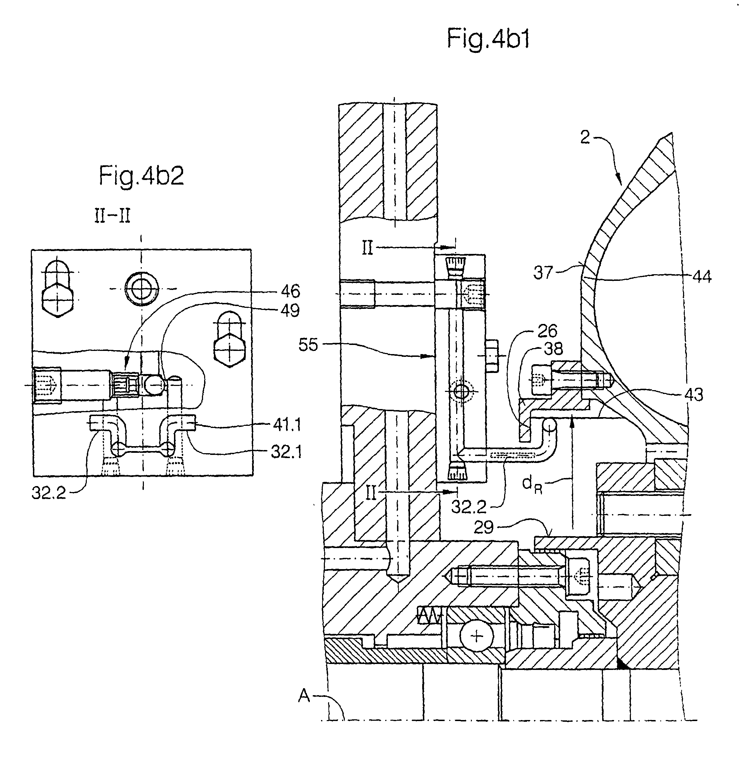

In den Figuren 4a und 4b sind weitere konkrete Ausführungen dargestellt.
Die Figur 4a1 verdeutlicht einen Teil des Primärschaufelrades 2, welcher einer Fangrinne 26 zugeordnet ist, die in einem Bereich angeordnet ist, welcher zwischen dem Innen- D_{IS} und dem Außendurchmesser D_{AS} der Beschaufelung 44 liegt. Die Fangrinne 26 erstreckt sich dabei in radialer Richtung bis in einen Bereich, welcher im Bereich des Arbeitsraumes 4 bzw. auf dessen Höhe liegt. Die Verbindung zwischen dem Stauraum 40 und dem Arbeitsraum 4 erfolgt über eine schräg ausgeführte Durchgangsöffnung 27.1, welche sich vom Schaufelradgrund 36 bis zur Schaufelradaußenseite 37 erstreckt, welche gleichzeitig eine äußere Begrenzungsfläche für die Fangrinne 26 bildet. Die Fangrinne 26 wird lediglich mittels eines ringförmigen Bauteiles 38 gebildet. Das Staudruckrohr 32.2 erstreckt sich dabei durch das ringförmige Bauteil 38 und ragt in den von der Fangrinne 26 gebildeten Stauraum 40 hinein. Das Staudruckrohr 32.2 ist dabei derart ausgeführt, daß der Öffnungsbereich 41.2 in Einbaulage in radialer Richtung oberhalb der Durchführung durch das ringförmige Element 38 angeordnet ist. Der den Öffnungsbereich tragende Teil 42.2 erstreckt sich vorzugsweise im wesentlichen parallel zu einem sich im Stauraum 40 einstellenden Betriebsmitteispiegel 43.

Die Figur 4a2 verdeutlicht eine Ansicht I-I entsprechend der Figur 4a1. Daraus wird der Verlauf des den Öffnungsbereich 41.2 tragenden Teiles 42.2 ersichtlich. Des weiteren ist erkennbar, daß aufgrund der Ausrichtung des Öffnungsbereiches 41.2 in Umfangsrichtung bei wechselnder Betriebsweise, d.h. Reversierbetrieb ein zweites Staudruckrohr 32.1 erforderlich wird, dessen Öffnungsbereich 41.1 sich in entgegengesetzter Richtung zum Öffnungsbereich 41.2 bezogen auf die Umfangsrichtung erstreckt. Die beiden Staudruckrohre 32.1 und 32.2 sind über die ihnen jeweils zugeordneten Leitungsabschnitte 47 und 48 über ein Rückschlagventil 46 mit einer gemeinsamen Leitung 49 verbunden.

In der Figur 4b1 ist eine Ausführung einer Fangrinne dargestellt, welche im radial innenliegenden Bereich des Primärschaufelrades 2 angeordnet ist. Dabei ist die Fangrinne 26 in einem, in radialer Richtung innenliegenden Bereich der Beschaufelung 44 des Primärschaufelrades 2 angeordnet. Auch hier wird der Stauraum durch den inneren Durchmesser d_{R} der Fangrinne 26, der Außenkontur 37 des Primärschaufelrades 2, und der Flächen 29 der mit dem Primärschaufelrad 2 drehfest verbundenen Bauteile begrenzt.

Die Kopplung des Stauraumes 40 mit dem Arbeitsraum 4 erfolgt über hier nicht dargestellte Durchgangsöffnungen 27.1, wie in der Figur 4a1 dargestellt. Es besteht jedoch auch die Möglichkeit unter gewissen Voraussetzungen die Kopplung zwischen Arbeits- und Stauraum über Durchgangsöffnungen vorzunehmen, welche im in radialer Richtung innenliegenden Teilbereich des Primärschaufelrades 2, welcher frei von einer Beschaufelung 44 ist, angeordnet sind.

Der Betriebsmittelspiegel 43 befindet sich hier in Höhe des Öffnungsbereiches 41.2. des Staudruckrohres 32.2. Das Staudruckrohr 32.2 ist auch hier derart gestaltet, daß der Öffnungsbereich 41.2 in Umfangsrichtung ausgerichtet und in das im Stauraum 40 befindliche Betriebsmittel eintaucht.
In Einbaulage erfolgt die Anordnung des Staudruckrohres 32 entsprechend des gewünschten zu begrenzenden Füllungsgrades in einem bestimmten Abstand zur Kupplungsachse A. Im dargestellten Fall ist das Staudruckrohr 32.2 oberhalb der Kupplungsachse A angeordnet.

Auch hier ist aufgrund der Ausrichtung des in den Öffnungsbereich ragenden Bauteiles des Staudruckrohres 32.2 bei Drehrichtungswechsel eine zweite Staudruckermittlungseinrichtung in Form eines zweiten Staudruckrohres 32.1 erforderlich. Dies ist in einer Ansicht II-II in der Figur 4b2 dargestellt. Daraus ist ersichtlich, daß beide Öffnungsbereiche 41.2 und 41.1 in Umfangsrichtung zueinander entgegengesetzt gerichtet sind. Auch hier sind beide Staudruckrohre 32.1 und 32.2 über jeweils eine Leitung 47 und 48, die über ein Rückschlagventil 46 miteinander verbunden sind, mit einer gemeinsamen Leitung 49 gekoppelt.

In den beiden Fällen (Fig. 4a und 4b) ist die Fangrinne 26 durch Zuhilfenahme eines ringförmig gestalteten Bauteiles 38, welches drehfest mit dem Primärschaufelrad 2 verbunden wird, gebildet. Es besteht jedoch theoretisch auch die Möglichkeit, die Fangrinne zusammen mit dem Primärschaufelrad als Baugruppe zu erstellen.

Des weiteren ist das Staudruckrohr in den in beiden Figuren dargestellten Ausführungen im Bauteil 55 am Gehäuse gelagert.

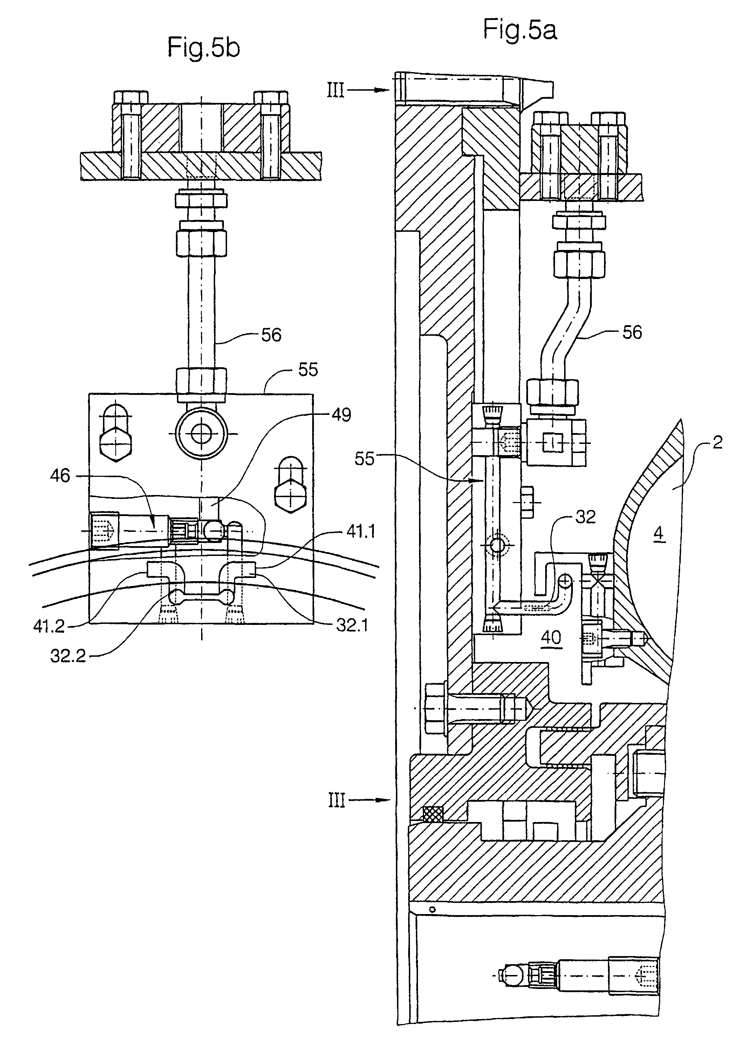

Die Figuren 5a und 5b verdeutlichen eine weitere Ausführungsmöglichkeit des Staudruckrohres 32. Das die Staudruckrohre 32.1 und 32.2 tragende Bauteil 55 ist am Gehäuse befestigt. Gegenüber den in den Figuren 4a und 4b dargestellten Möglichkeiten erfolgt die Leitungsführung vom Staudruckrohr 32 über eine, an der Gehäusewand befestigte Rohrverbindung 56. Die Figur 5b verdeutlicht dabei eine Ansicht III-III gemäß Figur 5a.

Der Grundaufbau von Schaufelrad 2, Arbeitsraum 4 und diesem zugeordnetem Stauraum 40, sowie die Erstreckung des Staudruckrohres in die Fangrinne 26 entspricht dem in den Figuren 4a1,2 und 4b1,2 beschriebenen, weshalb im Einzelnen hier nicht mehr darauf eingegangen werden soll. Für gleiche Elemente wurden daher die gleichen Bezugszeichen verwendet.

Die Figuren 3 bis 5 verdeutlichen lediglich Ausführungen zur Gestaltung der Fangrinne und der Durchgangsöffnungen. Andere Möglichkeiten, mit welchen die gleiche Funktion erfüllbar ist, sind ebenfalls denkbar. Entsprechend der Gestaltung der Kupplung mit ein oder mehreren Arbeitsräumen kann im erstgenannten Fall die Fangrinne entweder dem Primärschaufelrad oder dem Sekundärschaufelrad oder einer Schale zugeordnet werden, im letztgenannten Fall jedoch aus konstruktiven Gründen nur dem Primärschaufelrad. Die Fangrinne selbst ist dabei als separates Bauteil ausgeführt oder aber als ein Bauteil mit dem entsprechenden Schaufelrad.

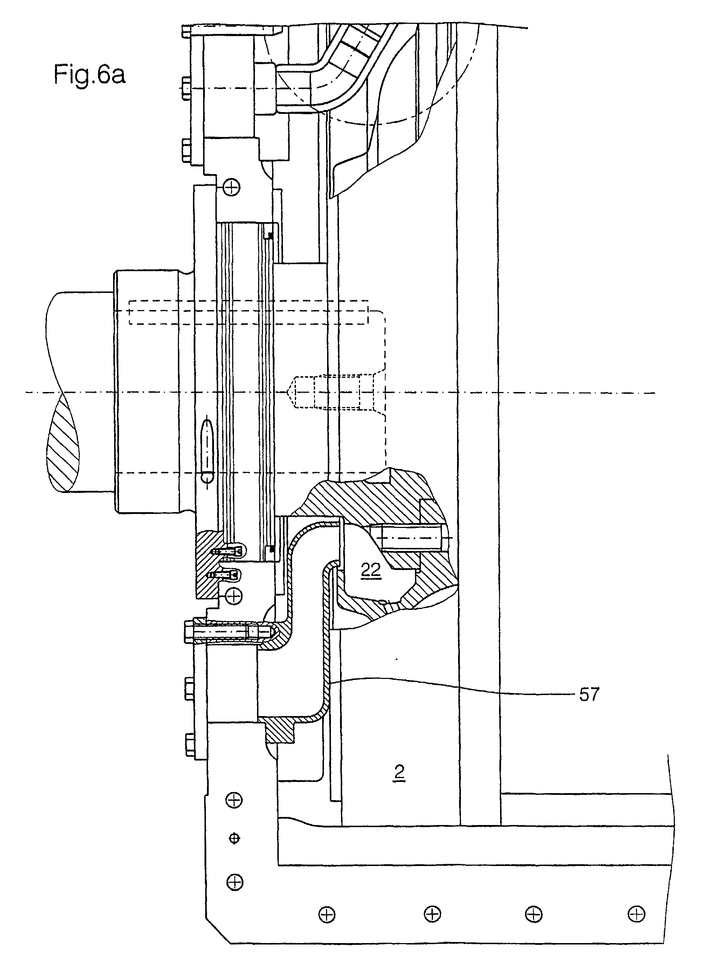

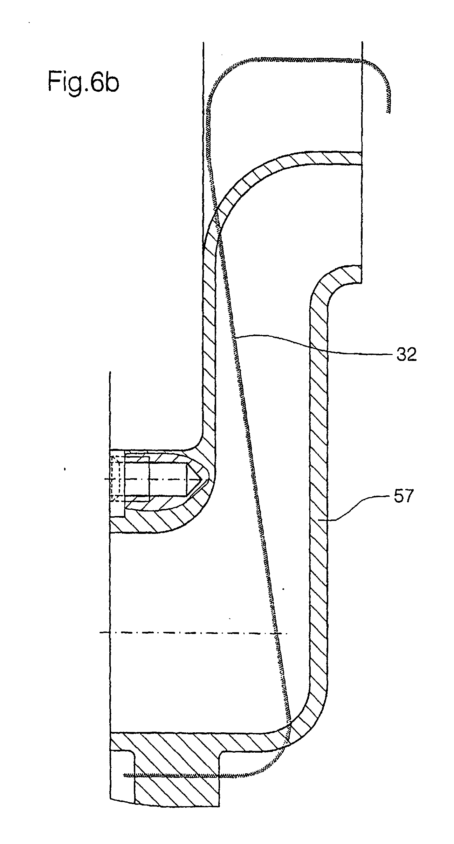

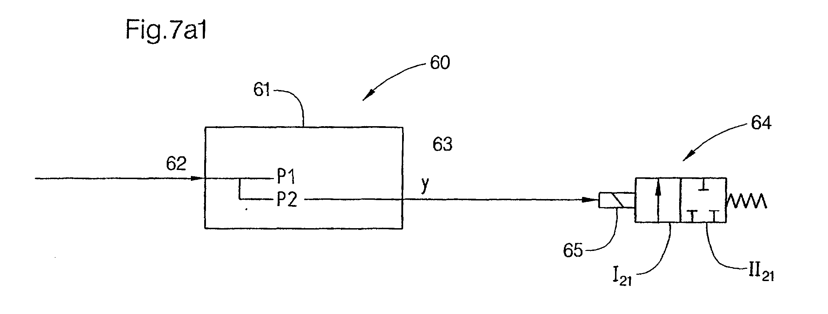

Eine vorteilhafte, hier im Einzelnen nicht vollständig in der Figur 6 dargestellte Ausführung besteht darin, daß als Fangrinne bzw. zur Druckwertaufnahme die Betriebsmittelfangrinne 22 in den Arbeitskreislauf 9.1 bzw. 9.2 verwendet wird. Diese verläuft vorzugsweise ebenfalls auf einem bestimmten Durchmesser über den gesamten Umfang. Das Staudruckrohr 32, kann hierbei in der Betriebsmittelfangrinne 22 angeordnet sein, d.h. in einem Bereich unterhalb der Kupplungsachse A im radial inneren Bereich des Schaufelrades, hier des Primärschaufelrades 2 angeordenet sein. Dabei wird die Erkenntnis genutzt, daß ein Ablaufen aus der Fangrinne 22 nur solange stattfindet, bis die Kupplung gefüllt ist, ab diesem Zeitpunkt findet kein Ablauf aus der Betriebsmittelfangrinne 22 mehr statt. Das Staudruckrohr kann zu diesem Zweck auch im Befüllsegment 57, welches der Betriebsmittelfangrinne 22 zugeordnet ist, angeordnet werden. Eine derartige Anordnungsmöglichkeit ist in der Figur 6b dargestellt. Diese zeigt lediglich das Befüllsegment 57 und schematisch vereinfacht dargestellt den Verlauf des Staudruckrohres 32.

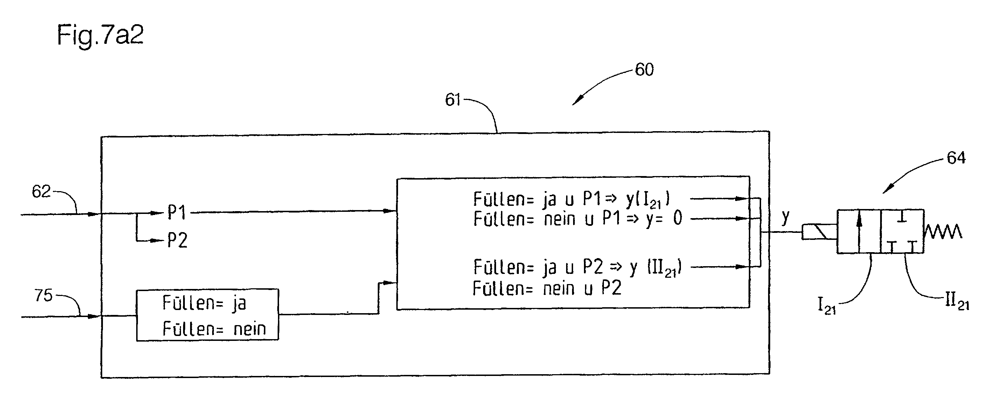

Die Figuren 7a bis 7d verdeutlichen in vereinfachter Darstellung anhand von Steuerschemas die Nutzung des mittels der Staudruckerzeugungs- bzw. erfassungseinrichtung ermittelten dynamischen Staudruckwertes p_{dynamisch} bzw. eines mit dieser Einrichtung erzeugten Drucksignals zur Ansteuerung einer Stelleinrichtung zur Beeinflussung der Betriebsmittelzufuhr zum Arbeitsraum 4 bzw. 5 der hydrodynamischen Kupplung 1.

Die Figuren 7a1 und 7a2 verdeutlichen anhand eines Blockschaltbildes die allgemeine Möglichkeit der Nutzung des mittels der Staudruckerzeugungs- bzw. meßeinrichtung bereitgestellten dynamischen Staudruckwertes p_{dynamisch} = 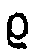 /2 · v². Eine Steuervorrichtung 60 weist dazu wenigstens eine Steuereinrichtung 61 auf, welche wenigstens jeweils einen ersten Eingang 62 und einen ersten Ausgang 63 umfaßt. Der erste Eingang 62 ist dabei wenigstens mittelbar mit der Staudruckzeugungs- bzw. erfassungseinrichtung koppelbar, während der erste Ausgang 63 wenigstens mittelbar mit der Einrichtung zur Beeinflussung der Zulaufmenge zum Arbeitsraum gekoppelt ist. Diese Einrichtung ist hier als Ventileinrichtung, vorzugsweise in Form eines 3/2-Wegeventiles ausgeführt und mit der Bezugsziffer 64 bezeichnet.

Über den ersten Eingang 62 wird der Steuereinrichtung 61 ein Drucksignal zugeführt. Dieses Drucksignal wird entweder vom ersten Druckwert p₁ oder vom zweiten erhöhten Druckwert p₂ gebildet. Entsprechend des am Eingang 62 anliegenden Signales wird am Ausgang 63 die Stellgröße Y zur Ansteuerung der Einrichtung zur Beeinflussung der Zulaufmenge zum Arbeitsraum der hydrodynamischen Kupplung gebildet. Liegt am Eingang 62 der erste Druckwert p₁ an, beträgt die gebildete Stellgröße gleich Null, d.h. es wird kein Signal zur Ansteuerung der Einrichtung zur Beeinflussung der Zulaufmenge zum Arbeitsraum der hydrodynamischen Kupplung 64 gebildet. Bei Anlegen eines zweiten erhöhten Druckwertes, welcher vorzugsweise direkt dem mit der Staudruckerzeugungs- bzw. erfassungseinrichtung 32 ermittelten hydrodynamischen Staudruck p_{dynamisch} entspricht, wird am Ausgang 63 eine Stellgröße Y ausgegeben, welche bewirkt, daß die Einrichtung 64 zur Beeinflussung der Zulaufmenge zum Arbeitsraum der hydrodynamischen Kupplung eine Stellung einnimmt, daß der Zulauf zum Arbeitsraum, und damit der Betriebsmittelzufluß zum Arbeitsraum, unterbrochen wird. Da es sich bei diesen Einrichtungen zur Beeinflussung der Zulaufmenge in der Regel um Ventileinrichtungen handelt, wird die Stellgröße Y in einer Form ausgegeben, welche an den Betätigungseinrichtungen 65 der Einrichtung zur Beeinflussung der Zulaufmenge zum Arbeitsraum der hydrodynamischen Kupplung wirksam werden. Die Beaufschlagung der Betätigungseinrichtungen 65 kann dabei elektrisch, pneumatisch, hydraulisch oder aber mechanisch erfolgen. Entsprechend der Auswahl der Betätigungseinrichtung 65 ist daher die Stellgröße Y zu bilden. Vorzugsweise erfolgt die Betätigung der Einrichtung zur Beeinflussung der Zulaufmenge zum Arbeitsraum der hydrodynamischen Kupplung 64 elektromagnetisch.

Im einfachsten Fall ist die Ventileinrichtung 64 mit einer Rückstelleinrichtung, beispielsweise in Form einer Federeinrichtung ausgeführt, welche bei Reduzierung der aufgebrachten Kraft an der Betätigungseinrichtung 65 aufgrund seiner Rückstellkraft die Schaltstellung II₂₁ an der Ventileinrichtung 64 einstellt. Bei einer elektromagnetischen Ansteuerung der Ventileinrichtung 64 zur Einstellung der Schaltstellung I₂₁ wird dann eine Stellgröße Y ausgegeben, die eine Unterbrechung der Stromzufuhr realisiert.

Vorzugsweise wird jedoch die gesamte Ansteuerung der Ventileinrichtung 64 von der Steuervorrichtung 60 übernommen. Dazu ist der Steuereinrichtung 61, wie in der Figur 7a2 dargestellt, ein weiterer zweiter Eingang 75 zur Vorgabe eines Signales zur Befüllung des Arbeitsraumes der hydrodynamischen Kupplung zugeordnet. Der zweite Eingang 75 ist mit einer Einrichtung zur Vorgabe eines Signales zur Befüllung der hydrodynamischen Kupplung koppelbar. Liegt am zweiten Eingang ein Signal an, welches wenigstens indirekt auf ein gewünschtes Befüllen der Kupplung gerichtet ist, wird am Ausgang eine Stellgröße Y ausgegeben, welche der Ansteuerung der Ventileinrichtung 64, insbesondere zur Beaufschlagung der Betätigungseinrichtung mit einer Stellkraft derart dient, daß die Ventileinrichtung die Leitung zum Befüllen des Arbeitsraumes wenigstens zum Teil freigibt. Ein zusätzliches Anliegen eines Signales für den ersten Druckwert p₁ am ersten Eingang 62 hat dann keinerlei Einfluß auf die Stellgröße Y. Liegt jedoch am ersten Eingang 62 der zweite erhöhte Druckwert p₂ an, ist dieser dem Füllsignal bevorrechtigt. Die Stellgröße Y wird in diesem Fall derart gebildet, daß die Ventileinrichtung eine Schaltstellung einnimmt, welche die Betriebsmittelzufuhr zum Arbeitsraum verringert oder unterbricht.

Die Steuereinrichtung 61 kann dabei als separates Steuergerät ausgeführt werden. Eine Ausführung als einfache Umwandlungseinrichtung, welche der Umwandlung von Eingangssignalen in Ausgangssignale unterschiedlicher Dimension dient, ist ebenfalls denkbar. Die einzelnen Steuerfunktionen können beispielsweise mittels einer Mikroprozessorensteuerung oder mittels entsprechend miteinander zu koppelnder Schaltelemente realisiert werden.

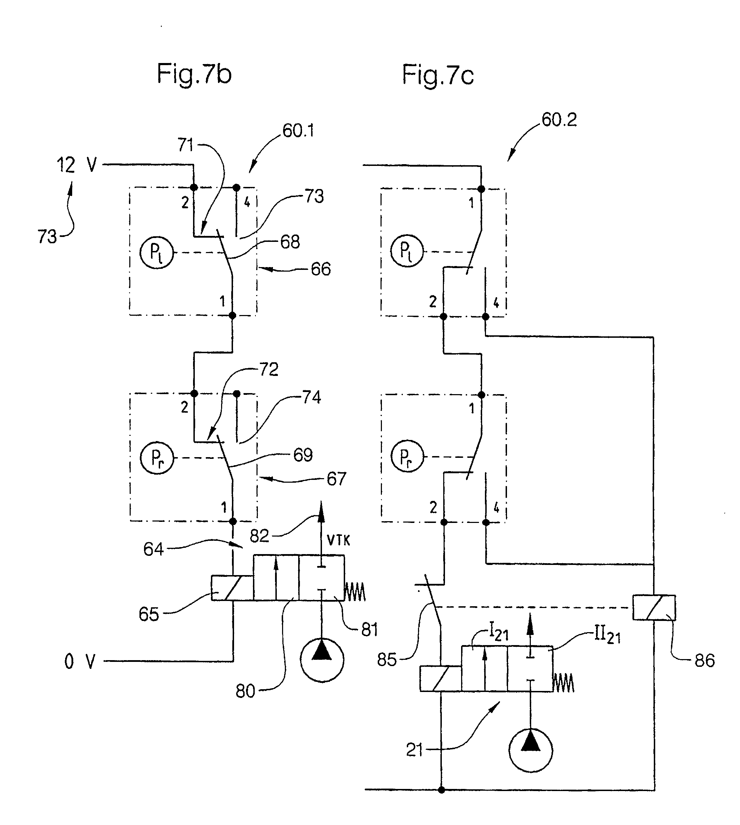

Die Figur 7b verdeutlicht anhand eines Steuerschemas für einen Druckschalteranschluß die zur Lösung der erfindungsgemäßen Aufgabe erforderliche minimale Ausstattung der Steuervorrichtung 60.1. Diese umfaßt hier jeweils zwei Druckschaltereinrichtungen, eine erste Druckschaltereinrichtung 66 und eine zweite Druckschaltereinrichtung 67, welche jeweils für unterschiedliche Drehrichtungen der Läuferteile der hydrodynamischen Kupplung 1 Anwendung finden. Die erste Druckschaltereinrichtung 66 ist dabei beispielsweise für die Drehrichtung Links vorgesehen, während die zweite Druckschaltereinrichtung 67 nur bei Drehrichtung Rechts aktivierbar ist. Die Druckschaltereinrichtungen sind mit einer Spannungsquelle gekoppelt und bilden die Verbindungsglieder zur Betätigungseinrichtung 65 der Einrichtung 64 zur Beeinflussung der Zulaufmenge zum Arbeitsraum der hydrodynamischen Kupplung, hier in Form eines 2/2-Wegeventiles. Beide Druckschaltereinrichtungen 66 und 67 sind in Reihe angeordnet. Ihre jeweiligen Schaltelemente 68 bzw. 69 ermöglichen dabei jeweils in der ersten Schaltstellung 1/2 bzw. 1/2 eine Verbindung zwischen einer hier im einzelnen nicht dargestellten Spannungsquelle und der Betätigungseinrichtung 65 der Einrichtung zur Beeinflussung der Zulaufmenge zum Arbeitsraum der hydrodynamischen Kupplung 64. In einer zweiten Schaltstellung 1/4 bzw. 1/4 ist diese Verbindung unterbrochen. Die Schalteinrichtungen 68 bzw. 69 werden dabei in Abhängigkeit des mittels der Staudruckerzeugungs- bzw. erfassungseinrichtung 32 erfassten dynamischen Druckes p_{dynamisch} der dem zweiten erhöhten Druckwert p₂ entspricht, betätigt. Dazu kann der dynamische Druck p_{dynamisch} direkt oder aber lediglich mittelbar zur Beaufschlagung der Schaltelemente 68 und 69 verwendet werden.

Die Einrichtung zur Beeinflussung der Zulaufmenge zum Arbeitsraum der hydrodynamischen Kupplung, das 2/2-Wegeventil 64 weist ebenfalls wenigstens zwei Schaltstellungen auf, eine erste Schaltstellung 80 und eine zweite Schaltstellung 81. In der ersten Schaltstellung 80 wird eine, hier im einzelnen nicht dargestellte, Betriebsmittelversorgungseinrichtung mit dem Arbeitsraum - bzw. der Zulaufleitung 82 - zum Arbeitsraum der hydrodynamischen Kupplung gekoppelt. In der zweiten Schaltstellung 81 ist der Betriebsmittelfluß zwischen Betriebsmittelversorgungseinrichtung und Zulaufleitung 82 unterbrochen. Da die erfindungsgemäße Lösung auf einem sogenannten Schwarz-Weiß-Prinzip beruht, d.h. für die beiden Füllungsgradzustände jeweils im wesentlichen nur zwei unterschiedliche Druckwerte bzw. Druckwertzustände ermittelt werden, können diese beiden Druckwertzustände auf die Betätigung der Schaltelemente 68 bzw. 69 der Druckschalteinrichtungen 66 bzw. 67 übertragen werden. Lediglich bei Erfassung eines dynamischen Staudruckwertes p_{dynamisch} wird die entsprechende Druckschalteinrichtung derart betätigt, daß die Schaltelemente 68 oder 69 in die jeweiligen Schaltpositionen 1/2 bzw. 1/2 oder 1/4 bzw. 1/4 verbracht werden, die eine Verbindung zwischen einer Spannungsquelle und der Betätigungseinrichtung 65 der Einrichtung zur Beeinflussung der Zulaufmenge zum Arbeitsraum der hydrodynamischen Kupplung 64 derart ermöglicht oder unterbricht, daß diese entweder die erste Schaltstellung 80 oder die zweite Schaltstellung 81 einnimmt.

Die Figur 7c verdeutlicht eine Ausführung einer Steuervorrichtung 60.2 entsprechend der Figur 7b, jedoch mit einer zusätzlichen Sicherungsmöglichkeit. Der Grundaufbau entspricht im wesentlichen dem in der Figur 7b beschriebenen. Auch hier werden die einzelnen Schalter 68 bzw. 69 der einzelnen Druckschalteinrichtungen 66 bzw. 67 durch den mittels der Staudruckerzeugungs- bzw. erfassungseinrichtung 32 erzeugten Staudruck oder einem zu diesem proportionalen Druckwert beaufschlagt. Entsprechend der Beaufschlagung der Schaltelemente und je nach Drehrichtung der Läuferteile der hydrodynamischen Kupplung wird auch hier die Einrichtung 64 zur Beeinflussung der Zulaufmenge zum Arbeitsraum der hydrodynamischen Kupplung 64, bzw. deren Betätigungseinrichtung 65 beaufschlagt. Des weiteren ist ein dritter Schalter 85 vorgesehen, welcher zur Unterbrechung der elektrischen Verbindung zwischen der Betätigungseinrichtung 65 und den einzelnen Druckschaltereinrichtungen 66 bzw. 67 dient. Dieser zusätzliche Schalter 85 wird über eine Verriegelungseinrichtung 86 angesteuert. Die Ansteuerung erfolgt vorzugsweise elektrisch, kann aber auch mechanisch, hydraulisch oder pneumatisch erfolgen. Diese zusätzliche Verriegelung mittels dem Verriegelungselement 86 ermöglicht es, einen Kurzschluß auf die Einrichtung zur Beeinflussung der Betriebsmittelzulaufmenge zum Arbeitsraum zu vermeiden.

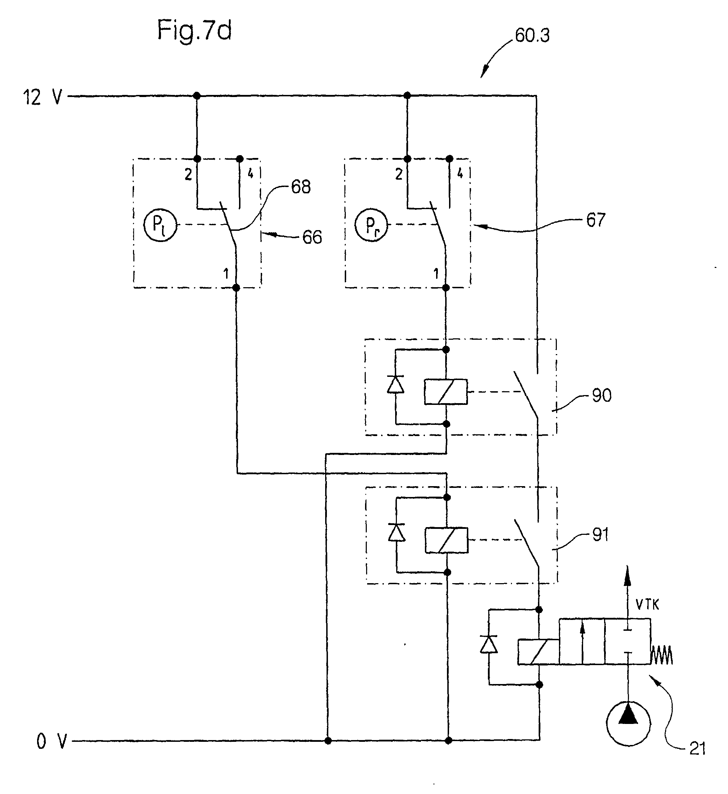

In der Figur 7d zeigt eine Weiterentwicklung der in der Figur 7b verdeutlichten Minimalausführung zur Realisierung der erfindungsgemäßen Funktion. Die Steuervorrichtung ist hier mit 60.3 bezeichnet. Diese umfaßt ebenfalls, wie bereits in den Figuren 7b und 7c beschrieben, zwei Druckschaltereinrichtungen 66 bzw. 67. Diese beiden Druckschaltereinrichtungen sind auch hier jeweils einer Rotationsrichtung der Läuferteile der hydrodynamischen Kupplung 1 zugeordnet. Die erste Druckschaltereinrichtung 66 ist dabei für eine Rotationsrichtung links und die zweite Druckschaltereinrichtung 67 für eine Rotationsrichtung rechts ausgelegt. Diese beiden Druckschaltereinrichtungen 66 und 67 sind je nach Ausführung der Staudruckerzeugungs- bzw. erfassungseinrichtung 32 entweder jeweils mit einem separaten, für die entsprechende Drehrichtung ausgerichteten Staudruckrohr, oder aber mit der Staudruckerzeugungs- bzw. erfassungsseinrichtung allgemein gekoppelt. Die Kopplung beschränkt sich im wesentlichen darauf, daß das Betätigungssignal für die Betätigung der Schaltelemente 68 bzw. 69 der beiden Druckschalteinrichtungen 66 bzw. 67, direkt auf die Schalter 68 bzw. 69 wirkt. Dazu kann das Drucksignal dem erzeugten dynamischen Staudruck p_{dynamisch} entsprechen oder diesem proportional sein. Denkbar ist jedoch auch eine Ausführung, bei welcher eine dem Staudruck wenigstens proportionale Größe, welche eine andere Dimension aufweisen kann, die Schalter 68 bzw. 69 beaufschlagt. Die Beaufschlagung kann dabei immer direkt oder aber auch indirekt über weitere Zwischengrößen erfolgen.

Jede der beiden Druckschalteinrichtungen 66 bzw. 67 ermöglicht über die Schaltelemente 68 bzw. 69 eine Einstellung oder ein Lösen der Verbindung der Betätigungseinrichtung 65 der Einrichtung zur Beeinflussung der Betriebsmittelzufuhr zum Arbeitsraum der hydrodynamischen Kupplung 64 mit einer hier im einzelnen nicht dargestellten Spannungsquelle. Die Verbindung wird in der Schaltposition 1/2 bzw. 1/2 der beiden Druckschalteinrichtungen erzielt. In der anderen Schaltposition 1/4 bzw. 1/4 findet eine Entkopplung zwischen Spannungsversorgungseinrichtung und Betätigungseinrichtung 65 statt.

Zur Vermeidung einer Überfüllung bei kurzzeitigem Abfallen des Signales von der Füllstandserkennungseinrichtung, d.h. im allgemeinen der Staudruckerzeugungs- bzw. erfassungseinrichtung, sind jedem der beiden Druckschalter 66 bzw. 67 eine Verzögerungseinrichtung in Form eines Verzögerungsrelais 90 bzw. 91 nachgeschaltet. Im dargestellten Fall sind der Druckschalteinrichtung 66 das Verzögerungsrelais 91 und der Druckschalteinrichtung 67 das Verzögerungsrelais 90 zugeordnet und nachgeschaltet. Die einzelnen Verzögerungsrelais 90 bzw. 91 sind derart ausgelegt, daß diese eine Überfüllung der Kupplung bei kurzzeitigem Abfallen des Signales für den zweiten Druckwert p₂ verhindern. Diese Zeitdauer kann frei wählbar oder aber entsprechend der Auslegung der Verzögerungsrelais 90 bzw. 91 fest vorgegeben sein. Vorzugsweise wird man eine sogenannte Verzögerungszeitdauer von 0 bis zu 5 Sekunden wählen. Dies bedeutet im einzelnen für die in der Figur 7d dargestellte Steuervorrichtung 60.3, daß beispielsweise bei Erkennen eines maximalen Füllungsgrades durch Erzeugen eines dynamischen Staudruckes in der Staudruckerzeugungs- bzw. erfassungseinrichtung beispielsweise bei Rotation in Drehrichtung links die erste Druckschalteinrichtung 66 mit dem ermittelten dynamischen Staudruck p_{dynamisch} bzw. einer zu diesem proportionalen Größe, angesteuert wird. Das Schalteelement 68 wird dabei in die Schaltposition 1/4 verbracht. Die Druckschalteinrichtung 66 bewirkt ein Abschalten des Verzögerungsrelais 91.

Die in den Figuren 7b bis 7d beschriebenen Ausführungen, insbesondere die einzelnen Steueraufgaben, können auch mittels einer Mikroprozessorsteuerung realisiert werden. In diesem Fall ist es auch denkbar, daß andere Umwandlungseinheiten zur Umwandlung der den dynamischen Staudruck charakterisierenden Größe in eine Größe entsprechend der Dimension zur Ansteuerung der Betätigungseinrichtung 65 umgewandelt wird. Die konkrete Ausgestaltung und die Zuordnung unterschiedlicher baulicher Komponenten zur Realisierung der angesprochenen Funktionen liegt im Ermessen des einzelnen Fachmannes.

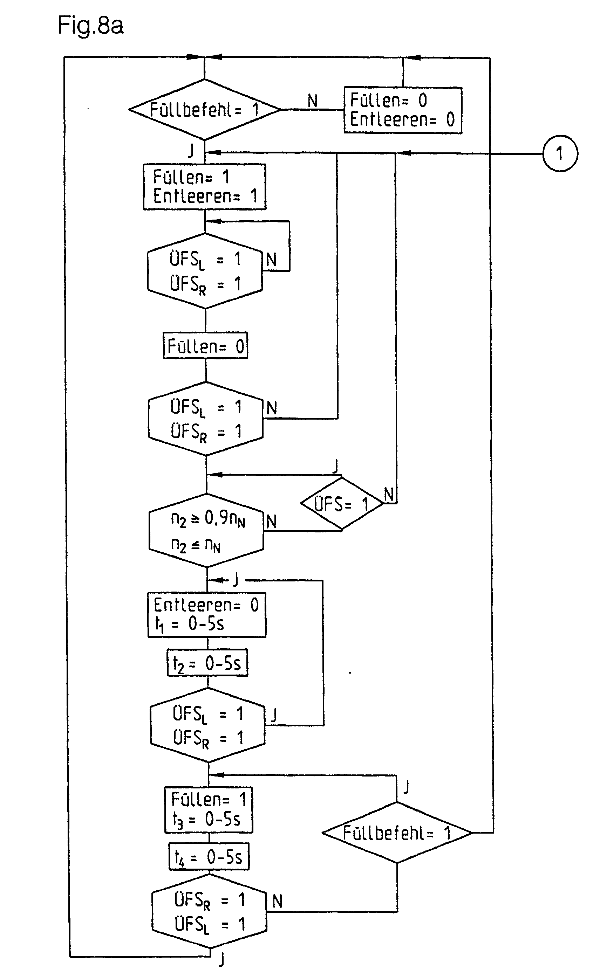

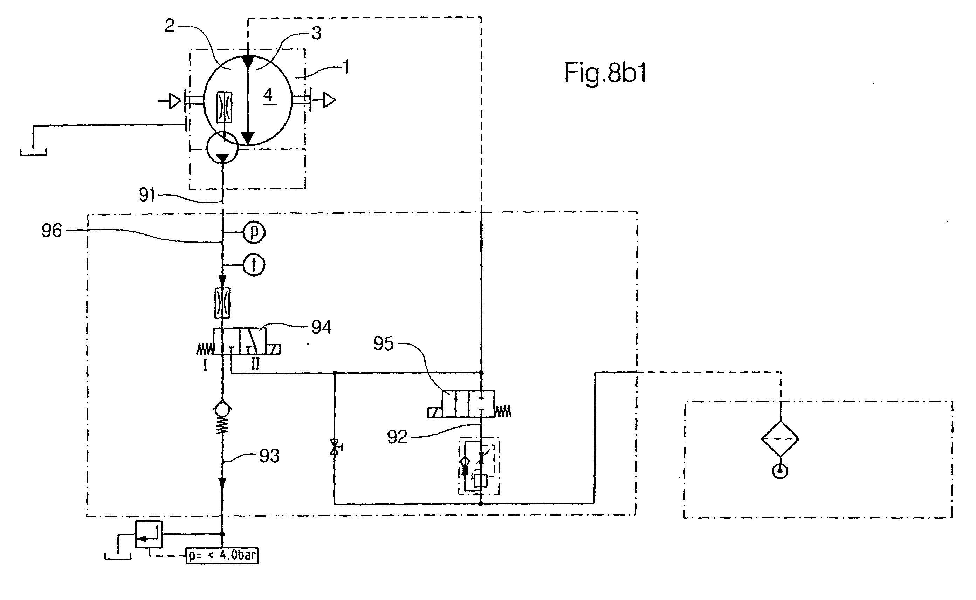

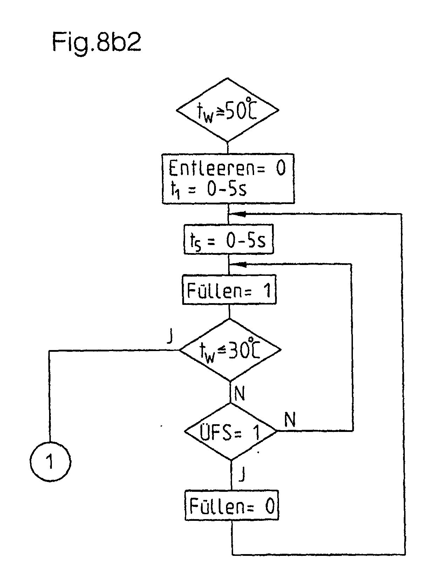

Die Figur 8a verdeutlicht anhand eines Signalflußbildes die mögliche Vorgehensweise zur Einstellung einer definierten Füllung bzw. eines vorgebbaren Füllungsgrades durch Einstellung der Position der Staudruckpumpe der hydrodynamischen Kupplung, insbesondere während der Inbetriebnahme. Die Einzelbezeichnungen im Flußdiagramm sind in nachfolgender Legende zu den Figuren 8a und 8b erläutert.

### Legende zu Logikplänen

- Füllen = 1:: Füllventil geöffnet; Zuspeisung v. Betriebsmedium
- Entleeren = 1:: Entleerventil geschlossen; keine Entnahme von Medium
- ÜFSᵣ = 1:: Füllstandserkennung angesprochen, Drehrichtung rechts
- ÜFSₗ = 1:: Füllstandserkennung angesprochen, Drehrichtung links
- ÜFS = 1:: Füllstandserkennung angesprochen (links oder rechts)
- n₂ ≥ 0,9 n_{N}:: Abtriebsdrehzahl, bei der die Füllstandserkennung sicher
- n₂ ≤ n_{N}: arbeitet
- Füllbefehl = 1:: Befehl von der Anlage, die VTK zu füllen
- Füllen = 0:: Füllventil geschlossen, keine Zuspeisung
- Entleeren = 0:: Entleerventil offen, VTK wird entleert
- t₁ = 0-5 s:: Taktzeit für Entleeren (Entleeren = 0)
- t₂ = 0-5 s:: Wartezeit (Entleeren = 1)
- t₃ = 0-5 s:: Taktzeit für Füllen ( Füllen = 1)
- t₄ = 0-5 s:: Wartezeit (Füllen = 0)
- t₅ = 0-5 s:: Wartezeit Wassertausch (Füllen = 1)
- T ≥ 50°C (höher?):: Störung Übertemperatur
- T_{zul.} ≤ 30° (höher?):: zul. Temperatur nach Wassertausch

Entscheidend ist, ob ein Füllbefehl, d.h. ein Signal zur Ansteuerung der Einrichtung 64 zur Beeinflussung der Zulaufmenge zum Arbeitsraum der hydrodynamischen Kupplung vorliegt. ist dieses Signal gegeben, wird die Einrichtung zur Beeinflussung der Zulaufmenge derart angesteuert, daß diese beispielsweise eine Betriebsmittelversorgungseinheit in Form eines Tanks mit dem Arbeitsraum bzw. der Zulaufleitung zum Arbeitsraum der hydrodynamischen Kupplung 1 verbindet. Der Ablauf aus dem Arbeitsraum der hydrodynamischen Kupplung ist verschlossen. Während des Befüllvorganges wird jetzt geprüft, ob ein Signal für einen zweiten erhöhten Druckwert p₂ von der Füllungsgradzustandserkennungseinrichtung vorliegt, d.h. die Füllstandserkennung ÜFS im Stauraum angesprochen ist. Vorzugsweise werden jeweils die Signale beider Einrichtungen für unterschiedliche Drehrichtung der Läuferteile der hydrodynamischen Kupplung überwacht. Wird lediglich nur der erste Druckwert p₁ ermittelt, d.h. die Füllstandserkennung hat nicht angesprochen, der Öffnungsbereich der Staudruckerzeugungs- bzw. erfassungseinrichtung befindet sich im betriebsmittelfreien Raum, wird der Befüllvorgang weiter fortgesetzt. Bei Vorliegen eines Signales für den zweiten erhöhten Druckwert p₂, d.h. bei Ansprechen der Füllstandserkennung ÜFS, wird die Einrichtung zur Beeinflussung der Zulaufmenge zum Arbeitsraum der hydrodynamischen Kupplung angesteuert und die Betriebsmittelzufuhr zum Arbeitsraum sofort unterbrochen, in der Regel durch Schließen des Füllventiles. Nach der Unterbrechung wird der Füllstand weiter überwacht. Gibt die Füllstandserkennungseinrichtung kein Signal, d.h. wird lediglich der erste Druckwert p₁ ermittelt, wird die Befüllung weiter fortgesetzt. Bei Erfassung des zweiten Druckwertes p₂, d.h. bei Erkennen des Vorliegens des Füllungsgrades, welcher dem maximal zulässigen Füllungsgrad entspricht, wird weitergeprüft, ob die Drehzahl n₂ der einzelnen Läuferteile, insbesondere des als Pumpenschaufelrad fungierenden Primärschaufelrades bereits eine bestimmte vorgebbare Drehzahl überschritten hat, welche vorzugsweise der Drehzahl entspricht, ab welcher die Füllungsgradzustandserkennung mit hoher Wahrscheinlichkeit fehlerfrei arbeitet. Bei Unterschreitung dieser Drehzahl n₂ und dem weiteren Vorliegen eines von der Füllungsgradzustandserkennungseinrichtung gebildeten Signals für einen erreichten maximalen zulässigen Füllungsgrad wird so lange weitergeprüft, bis diese Drehzahl n₂ erzielt ist und dann ein Entleeren von Betriebsmittel aus dem Arbeitsraum der hydrodynamischen Kupplung bewirkt. Im anderen Fall wird der Befüllvorgang weiter fortgesetzt. Der Entleervorgang findet jedoch nicht vollständig statt, sondern während einer Taktzeitdauer t₁ von vorzugsweise 0 bis 5 Sekunden. Zu diesem Zweck wird eine Einrichtung zur Beeinflussung des Auslaufes aus der hydrodynamischen Kupplung angesteuert. Diese Einrichtung kann dabei ein Ventil im Auslauf oder aber in der Ablaufleitung aus dem Arbeitsraum der hydrodynamischen Kupplung sein. Denkbar ist jedoch auch eine Zuordnung der Ablaufleitung zum Arbeitsraum über einen zwischengeordneten Kühlmittelkreislauf.

Nach dem Entleervorgang nach einer gewissen Wartezeit t₂ wird wiederum geprüft, ob der maximale Füllungsgrad der hydrodynamischen Kupplung erreicht wurde. Bei weiterem Vorliegen eines Signales von der Füllstandserkennung, welche auf Erreichen des maximalen Füllungsgrades hindeutet, werden weitere Maßnahmen ergriffen, um eine Entleerung aus dem Arbeitsraum vornehmen zu können. Wird jedoch ein Füllungsgrad ermittelt, welcher unter dem definierten maximal zulässigen Füllungsgrad liegt, wird ein erneutes Nachbefüllen vorgenommen. Vorzugsweise erfolgt dies ebenfalls in einer Zeitspanne t₃ von 0 bis 5 Sekunden. Nach einer gewissen weiteren zweiten Wartezeit t₄ wird dann erneut geprüft, ob ein Ansprechen der Füllstandserkennung vorliegt, d.h. ein zweiter erhöhter Druck p₂ ermittelt wird. Je nach Ergebnis wird dann entweder erneut befüllt oder die Füllung konstant gehalten.

Mittels der in diesem Signalflußbild verdeutlichten Verfahrensschritte zur Einstellung eines definierten Füllungsgrades einer hydrodynamischen Kupplung wird ersichtlich, daß zum Teil eine bloße Steuerung nicht ausreicht, sondern eine ständige Überwachung in Verbindung mit den Steuerungsmöglichkeit zur Einstellung eines vordefinierten Füllungsgrades der hydrodynamischen Kupplung erforderlich ist. Dabei werden so lange Nachfüllund Entleervorgänge vorgenommen, bis das Signal für den maximal zulässigen Füllungsgrad, welcher auch vorgebbar sein kann, ausgegeben wird.

Bezugnehmend auf die Ausführungen in den Figuren 7b bis 7d ist zur Erzielung einer vordefinierbaren Füllung der hydrodynamischen Kupplung die Einrichtung zur Beeinflussung der Zulaufmenge zum Arbeitsraum der hydrodynamischen Kupplung, d.h. das Füllventil, so lange geöffnet, bis die für die momentane Drehrichtung entsprechende Druckschalteinrichtung anspricht. Danach ist der Nennbetriebspunkt abzuwarten und eventuell eine Nachfüllung vorzunehmen. Zusätzlich kann das Entleerventil getaktet geöffnet werden, bis die Druckschalteinrichtung wieder abfällt. Eine weitere Möglichkeit besteht in der Taktung des Füllventiles, bis die Füllstandserkennung wieder anspricht.

Die Figur 8b verdeutlicht anhand eines Signalflußbildes die Verfahrensweise zur Einstellung eines entsprechend der Position der Staudruckpumpe vordefinierten frei wählbaren Füllungsgrades in einer Kupplungsausführung mit volumetrischem Betriebsmittelaustausch. Zu diesem Zweck ist in der Figur 8b1 zur Verdeutlichung der Vorgehensweise bei einer volumetrischen Kühlung ein Funktionsschema einer hydrodynamischen Kupplung dargestellt. Diese ist hier mit 1 bezeichnet. Die hydrodynamische Kupplungs 1 weist ein Primärschaufelrad 2 und ein Sekundärschaufelrad 3 auf. Das Primärschaufelrad fungiert dabei als Pumpenrad, das Sekundärschaufelrad als Turbinenrad. Das Primärschaufelrad und das Sekundärschaufelrad bilden wenigstens einen torusförmigen Arbeitsraum 4 miteinander. Während des Betriebes strömt das Betriebsmittel zwischen den beschaufelten Teilen von Primär- und Sekundärschaufelrad im Arbeitsraum 4 um. Diese Umwälzung wird auch als sogenannter Arbeitskreislauf bezeichnet. Da aufgrund der Umwälzung ein Teil der Strömungsenergie in Wärme umgesetzt wird, ist es erforderlich, das Betriebsmittel während des Dauerbetriebes aus dem Arbeitskreislauf herauszuführen und zu kühlen. Zu diesem Zweck ist dem Arbeitsraum ein Kreislauf 91 zugeordnet, welcher dem Umlauf von Betriebsmittel während des Dauerbetriebes dient. Diesem Kreislauf 91 sind jeweils eine Zulaufleitung 92 und eine Ablaufleitung 93 zugeordnet. Die Zulaufleitung 92 und die Ablaufleitung 93 sind wahlweise dem Kreislauf separat oder gemeinsam zuschaltbar. Zu diesem Zweck ist jeweils ein Schaltventil vorgesehen. Ein erstes Schaltventil 94, welches eine Kopplung zwischen Ablaufleitung 93 und Kreislauf 91 ermöglicht, sowie eine weitere Schalteinrichtung 95, welche der An- oder Entkopplung der Zulaufleitung 92 zum Kreislauf 91 dient. Die erste Schalteinrichtung 94 ist in Form eines 3/2-Wegeventils ausgeführt, die zweite Schalteinrichtung 95 ist wenigstens als 2/2-Wegeventil ausgebildet. Bei dem im Kreislauf 91 während des Dauerbetriebes umlaufenden Betriebsmittel handelt es sich um aus dem Arbeitsraum über Öffnungen an den Schaufelrädern in das Innere des Kupplungsgehäuses oder aber eines mit den Schaufelrädern mit rotierenden Läufers austretendes Betriebsmittel.

In der Ablaufleitung 96 aus dem Arbeitsraum 4 der hydrodynamischen Kupplung ist eine Einrichtung zur Erfassung der Temperatur im Kreislauf 91 vorgesehen. Entsprechend des ermittelten Temperaturwertes, welcher einen vorgebbaren Sollwert nicht überschreiten sollte, wird entschieden, ob Betriebsmittel aus dem Kreislauf 91 gegen Betriebsmittel geringerer Temperatur ausgetauscht werden soll. Bei Überschreiten der zulässigen Temperatur in der Ablaufleitung 96 wird die erste Schalteinrichtung 94, d.h. das 3/2-Wegeventil, dahingehend beaufschlagt, daß dieses eine erste Schaltstellung I einnimmt, in welcher die Auslaßleitung 96 mit der Ablaufleitung 93 gekoppelt ist. Damit wird das Betriebsmittel, welches im Kreislauf 91 ansonsten zu Kühlzwecken umströmen würde, zumindest teilweise aus dem Kreislauf 91 und damit auch dem Arbeitskreislauf geführt. Dieses Betriebsmittel muß durch neues Betriebsmittel ersetzt werden. Zu diesem Zweck wird das 2/2-Wegeventil 95 in eine erste Schaltposition 95.1 verbracht, in welcher die Zulaufleitung 92 mit dem Kreislauf 91 gekoppelt ist. Entsprechend dem aus dem Kreislauf 91 bzw. dem Arbeitskreislauf im Arbeitsraum 4 entzogenen Betriebsfluid ist es erforderlich, neues Betriebsmittel in den Kreislauf 91 einzuspeisen. Diese Einspeisung erfolgt über das 2-Wegeventil 95.

Die erste Schalteinrichtung 94 weist eine weitere zweite Schaltstellungen II auf. In der zweiten Schaltstellung II wird das aus dem Arbeitsraum ausgetretene Betriebsmittel im Kreislauf 91, welcher dann als geschlossener Kreislauf fungiert, dem Arbeitsraum 4 erneut zugeführt.

Für die definierte Füllung der Kupplung kann auf die im Signalflußbild entsprechend der Figur 8a beschriebene Vorgehensweise verwiesen werden. Bei Ermittlung einer erhöhten Temperatur T, d.h. nach dem Ansprechen der Temperaturüberwachungseinrichtung wird dann entsprechend dem Signalflußbild 8b1 das Entleerventil geöffnet und nach einer bestimmten einstellbaren Zeit t₅ auch das Ventil im Zulauf zum Arbeitsraum der hydrodynamischen Kupplung. Die Temperatur T wird weiter überwacht. Ist diese geringer als eine zulässige Temperatur T_{zul.}, kann die Einstellung des Füllungsgrades entsprechend der Vorgehensweise wie in Figur 8a beschrieben vorgenommen werden. Schnittstelle ist dabei 1. Wird der Bereich der zulässigen Temperatur T_{zul.} nicht erreicht, und gleichzeitig ein Ansprechen der Füllstandserkennungseinrichtung erfaßt, wird das Füllventil geschlossen und der Entleervorgang fortgesetzt.

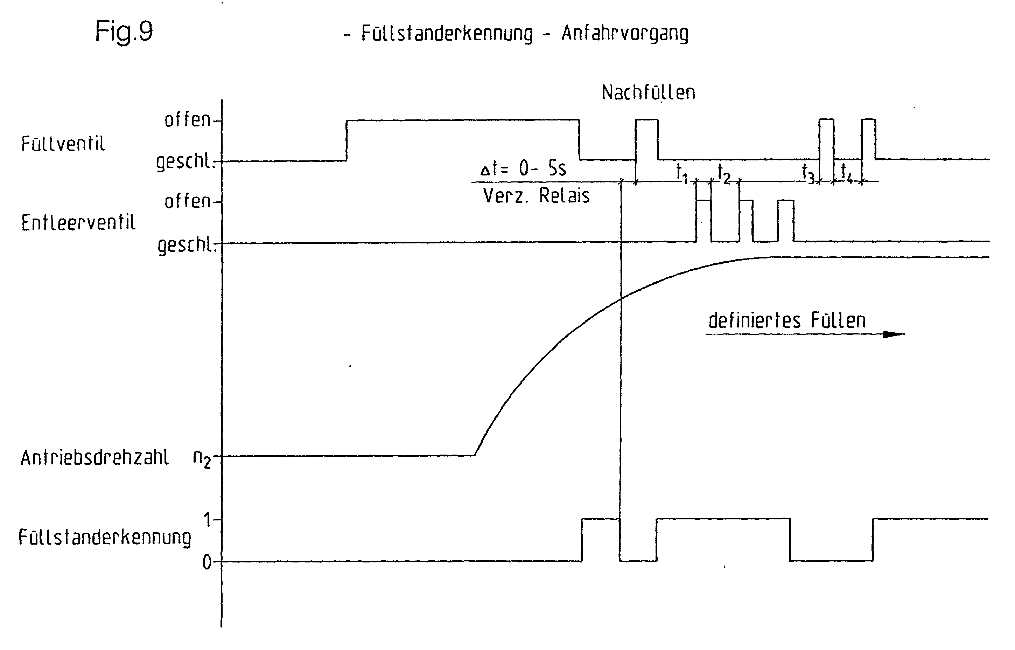

In der Figur 9 sind anhand von Diagrammen für den Anfahrvorgang die Betriebsweisen der Einrichtung zur Beeinflussung der Betriebsmittelzufuhrmenge in den Arbeitsraum der hydrodynamischen Kupplung, des Entleerventils, der Antriebsdrehzahlen und der Füllstandserkennung über der Zeit eingetragen. Diese Verhältnisse entsprechen den in der Figur 8a anhand des Signalflußbildes beschriebenen. Aus diesem Diagramm ist ersichtlich, daß die Einrichtung zur Beeinflussung der Zulaufmenge zum Arbeitsraum der hydrodynamischen Kupplung, d.h. das Füllventil so lange geöffnet ist, bis die Füllstandserkennung den zweiten erhöhten Druckwert anzeigt. Da es sich bei der Füllstandserkennung um eine sogenannte Schwarzweißschaltung handelt, kann man davon ausgehen, daß lediglich die zwei Zustände 0 und 1 berücksichtigt werden. Des weiteren wird ersichtlich, daß bei Erreichen des zweiten Druckwertes an der Staudruckerzeugungseinrichtung das Füllventil geschlossen wird. Während die Füllstandserkennung im weiteren Betrieb einen Zustand anzeigt, der lediglich einer Teilfüllung entspricht, wird das Füllventil dahingehend beeinflußt, daß ein Nachfüllvorgang im Arbeitsraum stattfindet. Nach Beendigung des Nachfüllvorganges, d.h. wenn das Füllventil bereits wieder geschlossen ist, wird von der Füllstandserkennung weiterhin der maximal zulässige Füllungsgrad angezeigt. Aus diesem Diagramm ist des weiteren ersichtlich, daß auch der Auslauf aus dem Arbeitsraum der hydrodynamischen Kupplung, insbesondere das Entleerventil in die Strategie zur definierten Füllungsgradeinstellung miteinbezogen werden. Somit findet während eines Zeitraumes, in welchem die Füllstandserkennung fortlaufend einen Füllungsgrad anzeigt, welcher dem maximal zulässigen Füllungsgrad entspricht, ein gezieltes zeitweiliges Öffnen der Entleerventile im Auslauf aus dem Arbeitsraum der hydrodynamischen Kupplung statt.

Die Auswahl der zur Erfüllung der einzelnen Funktionen erforderlichen Ventileinrichtungen erfolgt entsprechend des Einsatzfalles. Vorzugsweise werden jedoch Mehrwegeventile eingesetzt. Diese können auch stufenlos betätigbar sein.

Die Realisierung der Möglichkeit einer stufenlosen oder stufenweisen Verstellung der Staudruckpumpenposition kann vielgestaltig ausgeführt werden. Die konkrete konstruktive Auslegung liegt im Ermessen des Fachmannes und erfolgt entsprechend den Gegebenheiten des Einsatzfalles. Entsprechendes gilt auch für die Realisierung der Zusatzfunktionen, beispielsweise Verzögertes Ansprechen auf ein entsprechendes Drucksignal von der Staudruckerfassungseinrichtung, Bevorrechtigung des Füllstandssignales vor einem Signal für eine gewünschte Füllmenge.

## Patentansprüche

1. Verfahren zur Realisierung eines Überfüllschutzes einer hydrodynamischen Kupplung (1), umfassend wenigstens zwei Schaufelräder (2, 3), die wenigstens einen torusförmigen, mit einem Betriebsmittel befüllbaren Arbeitsraum (4, 5) bilden;
bei welchem der Füllungsgrad über eine, den Füllungsgrad wenigstens mittelbar charakterisierende Größe ermittelt wird und bei Erreichen eines maximalen Füllungsgrades die Betriebsmittelmittelzufuhr unterbrochen wird;
**gekennzeichnet durch** die folgenden Merkmale:
1.1 bei welchem während des Befüllvorganges in einem bestimmten Verhältnis zum Füllungsgrad der Kupplung Betriebsmittel aus dem Arbeitsraum in einen mit dem Arbeitsraum (4, 5) über wenigstens eine Durchgangsöffnung in einem Schaufelrad gekoppelten Stauraum (40) geleitet wird;
1.2 bei welchem wenigstens eine Staudruckerzeugungs- bzw erfassungseinrichtung (32, 32.1, 32.2) in den Stauraum (40) eingeführt wird;
1.3 bei welchem die Staudruckerzeugungs- bzw. erfassungseinrichtung (32, 32.1, 32.2) gegenüber dem Stauraum derart angeordnet wird, daß
1.3.1 in einem ersten Füllungsgradzustand, der einen Füllungsgrad kleiner dem maximalen Füllungsgrad entspricht, kein oder nur ein sehr kleiner erster, über den gesamten ersten Füllungsgradzustand konstanter Druck (p1) mit der Staudruckerzeugungs- bzw. erfassungseinrichtung (32, 32.1, 32.2) erfaßt wird und
1.3.2 in einem zweiten Füllungsgradzustand, der einem maximalen Füllungsgrad entspricht, ein zweiter wesentlich größerer Druck (p2) erfaßt wird und dieser zweite Druck wenigstens mittelbar zur Ansteuerung einer Einrichtung (21, 64) zur Unterbrechung der Betriebsmittelzufuhr zum Arbeitsraum (4, 5) genutzt wird, wobei beim Übergang von einem in den anderen Zustand wenigstens ein Signalsprung erzeugt wird.

2. Verfahren nach Anspruch 1 mit einer Staudruckerzeugungs- bzw. erfassungseinrichtung in Form wenigstens eines Staudruckrohres (32, 32.1, 32.2) mit einem sich in den Stauraum (40) erstreckenden Öffnungsbereich (41.1, 41.2);
2.1 bei. welchem lediglich im zweiten Füllungsgradzustand Betriebsmittel im Stauraum (40) durch den Öffnungsbereich (41.1, 41.2) am Staudruckrohr (32, 32.1, 32.2) aufgenommen wird und der dynamische Druck im Staudruckrohr (32, 32.1, 32.2), welcher als zweiter erhöhter Druckwert fungiert, erfasst wird;
2.2 bei welchem der zweite erhöhte Druck wenigstens mittelbar als Eingangssignal einer Steuervorrichtung (60, 61) fungiert.

3. Verfahren nach einem der Ansprüche 1 oder 2, **dadurch gekennzeichnet, daß** der maximale Füllungsgrad dem theoretisch maximal zulässigen Füllungsgrad von 100% entspricht.

4. Verfahren nach einem der Ansprüche 1 oder 2, **dadurch gekennzeichnet, daß** der maximale Füllungsgrad durch Einstellung der Position der Staudruckerzeugungs- bzw. erfassungseinrichtung (32, 32.1, 32.2) gegenüber dem Stauraum (40) frei einstellbar ist.

5. Verfahren nach einem der Ansprüche 1 bis 4, **dadurch gekennzeichnet, daß** die Unterbrechung der Betriebsmittelversorgung zum Arbeitsraum (4, 5) zeitlich verzögert zur Erfassung des zweiten erhöhten Druckwertes erfolgt.

6. Verfahren nach einem der Ansprüche 1 bis 5, **gekennzeichnet durch** die folgenden Merkmale:
6.1 bei welchem nach Unterbrechung bei Erfassung eines ersten Druckwertes (p1) die Betriebsmittelzufuhr wieder freigegeben wird;
6.2 bei weichern bei erneuter Erfassung des zweiten erhöhten Druckwertes (p2) zusätzlich die aktuelle Antriebsdrehzahl oder eine diese wenigstens mittelbar charakterisierende Größe ermittelt und mit einer vorgebbaren Vergleichsgröße verglichen wird, ab welcher eine fehlerfreie Betriebsweise der Füllstandserkennung erfolgt;
6.3 bei welchem bei Unterschreitung dieser Antriebsdrehzahl oder der diese wenigstens mittelbar charakterisierenden Größe und lediglich der Anzeige des ersten Druckwertes (p1) der Füllvorgang fortgesetzt wird, während bei Erkennen des zweiten Füllungsgradzustandes der Füllvorgang bis zum Erreichen der Vergleichsgröße fortgesetzt wird;
6.4 bei Erreichen der Vergleichsgröße und dem Erkennen des zweiten Füllungsgradzustandes wird der Arbeitsraum (4, 5) der hydrodynamischen Kupplung zeitweise entleert, wobei bei Vorliegen des ersten Druckwertes (p1) der Füllvorgang erneut aktiviert und über eine vorgebbare Zeitdauer vorgenommen wird;
6.5 nach Ablauf einer Wartezeit wird wieder das Vorliegen eines ersten (p1) oder zweiten Druckes (p2) geprüft.

7. Verfahren nach einem der Ansprüche 1 bis 6, wobei dem Arbeitsraum (4, 5) wenigstens ein Kühlkreislauf (10) zugeordnet ist, **gekennzeichnet durch** folgende Merkmale:
7.1 bei welchem im Kühlkreislauf (10) die aktuelle Temperatur ermittelt wird;
7.2 bei welchem bei Überschreitung einer maximal zulässigen Temperatur Betriebsmittel aus dem Kühlkreislauf (10) über eine bestimmte Zeitdauer entleert wird;
7.3 bei welchem während oder nach dieser Zeitdauer Betriebsmittel in den Kühlkreislauf (10) eingespeist wird;
7.4 bei welchem nach erfolgtem Betriebsmittelaustausch die Temperatur im Kühlmittelkreislauf (10) ermittelt und mit einem weiteren zweiten zulässigen Temperaturwert für den Betriebszustand nach dem Betriebsmitteltausch verglichen wird und bei Abweichung und zusätzlichem Auftreten des zweiten erhöhten Druckwertes (p2) der Füllvorgang abgebrochen und Betriebsmittel erneut entleert wird.

8. Hydrodynamische Kupplung zur Durchführung des Verfahrens gemäß einem der Ansprüche 1 bis 7;
8.1 mit wenigstens zwei Schaufelrädern, einem Primärschaufelrad (2) und einem Sekundärschaufelrad (3), welche miteinander wenigstens einen, mit Betriebsmittel befüllbaren torusförmigen Arbeitsraum (4, 5) bilden;
8.2 dem torusförmigen Arbeitsraum (4, 5) ist wenigstens eine Zufuhrleitung (17, 82) für Betriebsmittel zugeordnet;
8.3 dem Arbeitsraum (4, 5) ist eine Einrichtung (32, 32.1, 32.2) zur Erfassung einer den Füllungsgrad wenigstens indirekt charakterisierenden Größe zugeordnet;
8.4 die Einrichtung (32, 32.1, 32.2) ist wenigstens mittelbar mit einer Einrichtung (21, 64) zur Beeinflussung der Zulaufmenge zum Arbeitsraum (4, 5) gekoppelt;
**gekennzeichnet durch** die folgenden Merkmale:-
8.5 die Einrichtung(32, 32.1, 32.2) zur Erfassung einer den Füllungsgrad wenigstens indirekt charakterisierenden Größe umfaßt
8.5.1 einen, einem Schaufelrad (2, 3) zugeordneten und mit dem Arbeitsraum (4, 5) über wenigstens eine Durchgangsöffnung in einem Schaufelrad gekoppelten Stauraum (40) und
8.5.2 eine Staudruckerzeugungs- bzw. erfässungseinrichtung (32, 32.1, 32.2), welche sich in den Stauraum (40) erstreckt, wobei die Zuordnung der Staudruckerzeugungs- bzw. erfassungseinrichtung (32, 32.1, 32.2) zum Stauraum (40) derart erfolgt, daß erst bei einem bestimmten Betriebsmittelstand im Stauraum (40), welcher einem bestimmten maximalen Füllungsgrad entspricht, die Staudruckerzeugungs- bzw. erfassungseinrichtung (32, 32.1, 32.2) Betriebsmittel aufnimmt und der **dadurch** erfasste dynamische Staudruck als Signal zur wenigstens mittelbaren Ansteuerung der Enrichtung zur Unterbrechung der Zufuhr zum Arbeitsraum (4,5) verwendet wird.

9. Hydrodynamische Kupplung nach Anspruch 8, **dadurch gekennzeichnet, daß** der Stauraum (40) von einer, einem Schaufelrad (2, 3) zugeordneten Fangrinne (26) gebildet wird.

10. Hydrodynamische Kupplung nach Anspruch 9, **dadurch gekennzeichnet, daß** die Fangrinne (26) von wenigstens einem separaten, lösbar mit dem Schaufelrad (2, 3) verbindbaren Bauteil (38, 50) gebildet wird.

11. Hydrodynamische Kupplung nach Anspruch 9, **dadurch gekennzeichnet, daß** die Fangrinne (26, 22) vom Schaufelrad (2, 3) gebildet wird.

12. Hydrodynamische Kupplung nach einem der Ansprüche 8 bis 11, **dadurch gekennzeichnet, daß** die Staudruckerzeugungs- bzw. erfassungseinrichtung (32, 32.1, 32.2) in ihrer Position gegenüber dem Stauraum (40) verstellbar ausgeführt ist

13. Hydrodynamische Kupplung nach einem der Ansprüche 8 bis 12, **dadurch gekennzeichnet, daß** die Staudruckerzeugungs- bzw. erfassungseinrichtung in Form wenigstens eines Staudruckrohres (32, 32.1, 32.2) ausgeführt ist.

14. Hydrodynamische Kupplung nach Anspruch 13, **gekennzeichnet durch** die folgenden Merkmale:
14.1 das Staudruckrohr (32, 32.1, 32.2) umfaßt wenigsten ein, einen Öffnungsbereich (41.1, 41.2) tragendes Bauteil (42.1, 42.2) zur Aufnahme von Betriebsmittel;
14.2 das den Öffnungsbereich tragende Bauteil (42.1, 42.2) ist mit einem, bezogen auf die Kupplungsachse (A) in radialer Richtung wenigstens zum Teil entgegen die Schwerkraftrichtung gerichteten Rohrteil verbunden.

15. Hydrodynamische Kupplung nach Anspruch 14, **dadurch gekennzeichnet, daß** das den Öffnungsbereich tragende Bauteil (42.1, 42.2) im wesentlichen parallel zu einem, sich im Stauraum (40) einstellenden Betriebsmittelspiegel (43) ausgeführt ist.

16. Hydrodynamische Kupplung nach einem der Ansprüche 14 oder 15, **dadurch gekennzeichnet, daß** das den Öffnungsbereich tragende Bauteil (42.1, 42.2) sich in Richtung des Schaufelrades (2, 3) ertreckt.

17. Hydrodynamische Kupplung nach einem der Ansprüche 14 oder 15, **dadurch gekennzeichnet, daß** das den Öffnungsbereich tragende Bauteil (42.1, 42.2) sich in Umfangsrichtung erstreckt.

18. Hydrodynamische Kupplung nach einem der Ansprüche 16 oder 17, **gekennzeichnet durch** die folgenden Merkmale:
18.1 der Öffnungsbereich (41.1, 41,2) ist in Umfangsrichtung gerichtet;
18.2 für den Reversierbetrieb sind zwei Staudruckrohre (32.1, 32.2) mit einander entgegengesetzt gerichteten Öffnungsbereichen (41.1, 41.2) vorgesehen;
18.3 die beiden Staudruckrohre (32.1, 32.2) sind über eine Ventileinrichtung (46) mit einer gemeinsamen Leitung (49) verbindbar.

19. Hydrodynamische Kupplung nach einem der Ansprüche 16 oder 17, **gekennzeichnet durch** die folgenden Merkmale:
19.1 der Öffnungsbereich (41.1, 41,2) ist in Umfangsrichtung gerichtet;
19.2 für den Reversierbetrieb sind am Staudruckrohr zwei einander entgegengesetzt gerichtete Öffnungsbereiche vorgesehen.

20. Hydrodynamische Kupplung nach einem der Ansprüche 14 bis 16, **dadurch gekennzeichnet, daß** das den Öffnungsbereich (41.1, 41,2) tragende Bauteil vom, bezogen auf die Kupplungsachse (A) in radialer Richtung wenigstens zum Teil entgegen die Schwerkraftrichtung gerichteten Rohrteil gebildet wird.

21. Hydrodynamische Kupplung nach einem der Ansprüche 7 bis 20, **dadurch gekennzeichnet, daß** die Durchgangsöffnungen (27) in radialer Richtung im Bereich des beschaufelten Teiles (44) des Schaufelrades (2, 3) angeordnet sind.

22. Hydrodynamische Kupplung nach einem der Ansprüche 7 bis 21, **dadurch gekennzeichnet, daß** die Durchgangsöffnungen (27, 27.1) in radialer Richtung im Bereich des von der Beschaufelung (44) freien Teiles des Schaufelrades (2, 3) angeordnet ist.

23. Hydrodynamische Kupplung nach einem der Ansprüche 7 bis 22, **dadurch gekennzeichnet, daß** das Primär- und das Sekundärschaufelrad (2, 3) einen Arbeitsraum (4) miteinander bilden.

24. Hydrodynamische Kupplung nach Anspruch 23, **dadurch gekennzeichnet, daß** das Primär- und das Sekundärschaufelrad (2, 3) wenigstens noch einen weiteren Arbeitsraum (5) miteinander bilden.

25. Hydrodynamische Kupplung nach einem der Ansprüche 23 oder 24, **dadurch gekennzeichnet, daß** der Stauraum (40) dem Primärschaufelrad (2) zugeordnet ist.

26. Hydrodynamische Kupplung nach Anspruch 23, **dadurch gekennzeichnet, daß** der Stauraum (40) dem Sekundärschaufelrad (3) zugeordnet ist.

27. Hydrodynamische Kupplung nach einem der Ansprüche 7 bis 26, **dadurch gekennzeichnet, daß** der Stauraum (40) sich in radialer Richtung bis in einen Bereich erstreckt, der auf einem geringeren Durchmesser als den Schaufelradaußenunrfang (D_{AS}) angeordnet ist.

## Claims

1. Process for producing an overfill preventer for a hydrodynamic clutch (1) comprising at least two bladed wheels (2, 3) which form at least one toroidal working chamber (4, 5) which may be filled with an operating medium; in which the filling level is determined via a variable which at least indirectly characterises the filling level, and the supply of operating medium is interrupted on attainment of a maximum filling level; **characterised by** the following features:
1.1 in which operating medium is conveyed from the working chamber into a retention chamber (40) coupled to the working chamber (4, 5) via at least one through-orifice in a bladed wheel in a specific ratio to the filling level of the clutch during the filling process;
1.2 in which at least one dynamic pressure producing and detecting device (32, 32.1, 32.2) is introduced into the retention chamber (40);
1.3 in which the dynamic pressure producing and detecting device (32, 32.1, 32.2) is arranged opposite the retention chamber in such a way that
1.3.1 in a first filling level state corresponding to a filling level lower than the maximum filling level, no or only a very low first pressure (p1), which is constant throughout the first filling level state, is detected by the dynamic pressure producing and detecting device (32, 32.1, 32.2) and
1.3.2 in a second filling level state corresponding to a maximum filling level, a second substantially higher pressure (p2) is detected and this second pressure is used at least indirectly to trigger a device (21, 64) for interrupting the supply of operating medium to the working chamber (4, 5), at least one signal jump being produced at the transition from one state to the other.

2. Process according to claim 1 with a dynamic pressure producing and detecting device in the form of at least one Pitot tube (32, 32.1, 32.2) with an orifice region (41.1, 41.2) extending into the retention chamber (40);
2.1 in which operating medium is received in the retention chamber (40) through the orifice region (41.1, 41.2) on the Pitot tube (32, 32.1, 32.2) only in the second filling level state and the dynamic pressure in the Pitot tube (32, 32.1, 32.2) acting as the second elevated pressure value is detected;
2.2 in which the second elevated pressure acts at least indirectly as an input signal of a controller (60, 61).

3. Process according to either of claims 1 or 2, **characterised in that** the maximum filling level corresponds to the theoretical maximum permitted filling level of 100%.

4. Process according to either of claims 1 or 2, **characterised in that** the maximum filling level may be adjusted freely by adjusting the position of the dynamic pressure producing and detecting device (32, 32.1, 32.2) relative to the retention chamber (40).

5. Process according to any one of claims 1 to 4, **characterised in that** the supply of operating medium to the working chamber (4, 5) is interrupted after a time delay for detecting the second elevated pressure value.

6. Process according to any one of claims 1 to 5, **characterised by** the following features:
6.1 in which, after interruption, the supply of operating medium is released again on detection of a first pressure value (p1);
6.2 in which, on renewed detection of the second elevated pressure value (p2), the current drive speed or a variable which at least indirectly characterises it, is additionally determined and compared with a predeterminable comparison variable, from which a perfect mode of filling level detection takes place;
6.3 in which, when the drive speed falls below this value or the variable at least indirectly **characterising** it or and only the first pressure value (p1) is displayed, the filling process is continued, whereas, when the second filling level state is detected, the filling process is continued until the comparison variable is attained;
6.4 when the comparison variable is attained and the second filling level state is detected, the working chamber (4, 5) of the hydrodynamic clutch is intermittently emptied, the filling process being activated again and being carried out for a predeterminable period of time when the first pressure value (p1) is present;
6.5 the presence of a first pressure (p1) or second pressure (p2) is tested again after expiry of a waiting time.

7. Process according to any one of claims 1 to 6, wherein at least one cooling circuit (10) is associated with the working chamber (4, 5) **characterised by** the following features:
7.1 in which the current temperature is determined in the cooling circuit (10);
7.2 in which operating medium is emptied from the cooling circuit (10) over a specific period of time when a maximum permitted temperature is exceeded;
7.3 in which operating medium is introduced into the cooling circuit (10) during or after this period of time;
7.4 in which, after exchange of operating medium, the temperature in the coolant circuit (10) is determined and compared with a further, second permitted temperature value for the operating state after the exchange of operating medium and, when the second, elevated pressure value (p2) deviates and additionally occurs, the filling process is interrupted and operating medium emptied again.

8. Hydrodynamic clutch for carrying out the process according to any one of claims 1 to 7;
8.1 comprising at least two bladed wheels, a primary bladed wheel (2) and a secondary bladed wheel (3) which together form at least one toroidal working chamber (4, 5) which may be filled with operating medium;
8.2 the toroidal working chamber (4, 5) is provided with at least one supply line (17, 82) for operating medium;
8.3 the working chamber (4, 5) is provided with a device (32, 32.1, 32.2) for detecting a variable at least indirectly **characterising** the filling level;
8.4 the device (32, 32.1, 32.2) is coupled at least indirectly to a device (21, 64) for influencing the amount fed to the working chamber (4, 5);
**characterised by** the following features:
8.5 the device (32, 32.1, 32.2) for detecting a variable at least indirectly **characterising** the filling level comprises
8.5.1 a retention chamber (40) associated with a bladed wheel (2, 3) and coupled to the working chamber (4, 5) via at least one through-orifice in a bladed wheel and
8.5.2 a dynamic pressure producing and detecting device (32, 32.1, 32.2) which extends into the retention chamber (40), the dynamic pressure producing and detecting device (32, 32.1, 32.2) being associated with the retention chamber (40) in such a way that, only at a specific operating medium level in the retention chamber (40) corresponding to a specific maximum filling level, the dynamic pressure producing and detecting device (32, 32.1, 32.2) receives operating medium and the dynamic pressure thus detected is used as a signal for the at least indirect triggering of the device for interrupting the supply to the working chamber (4, 5).

9. Hydrodynamic clutch according to claim 8, **characterised in that** the retention chamber (40) is formed by a collecting channel (26) associated with the bladed wheel (2, 3).

10. Hydrodynamic clutch according to claim 9, **characterised in that** the collecting channel (26) is formed by at least one separate component (38, 50) which may be connected to the bladed wheel (2, 3).

11. Hydrodynamic clutch according to claim 9, **characterised in that** the collecting channel (26, 22) is formed by the bladed wheel (2, 3).

12. Hydrodynamic clutch according to any one of claims 8 to 11, **characterised in that** the dynamic pressure producing and detecting device (32, 32.1, 32.2) is adjustable in position relative to the retention chamber (40).

13. Hydrodynamic clutch according to any one of claims 8 to 12, **characterised in that** the pressure producing and detecting device is constructed in the form of at least one Pitot tube (32, 32.1, 32.2).

14. Hydrodynamic clutch according to claim 13, **characterised by** the following features:
14.1 the Pitot tube (32, 32.1, 32.2) comprises at least one component (42.1, 42.2) carrying an orifice region (41.1, 41.2) for receiving operating medium;
14.2 the component (42.1, 42.2) carrying the orifice region is connected to a tube portion directed radially with respect to the clutch axis (A), at least in part against the direction of gravity.

15. Hydrodynamic clutch according to claim 14, **characterised in that** the component (42.1, 42.2) carrying the orifice region is constructed substantially parallel to an operating medium level (43) adjusted in the retention chamber (40).

16. Hydrodynamic clutch according to either of claims 14 or 15, **characterised in that** a component (42.1, 42.2) carrying the orifice region extends in the direction of the bladed wheel (2, 3).

17. Hydrodynamic clutch according to either of claims 14 or 15, **characterised in that** the component (42.1, 42.2) carrying the orifice region extends circumferentially.

18. Hydrodynamic clutch according to either of claims 16 or 17, **characterised by** the following features:
18.1 the orifice region (41.1, 41.2) is directed circumferentially,
18.2 two Pitot tubes (32.1, 32.2) with orifice regions (41.1, 41.2) facing in opposite directions to one another, are provided for reciprocating operation;
18.3 the two Pitot tubes (32.1, 32.2) may be connected to a common pipe (49) via a valve device (46).

19. Hydrodynamic clutch according to either of claims 16 or 17, **characterised by** the following features:
19.1 the opening region (41.1, 41.2) is directed circumferentially;
19.2 two orifice regions facing in opposite directions to one another are provided on the Pitot tube for reciprocating operation.

20. Hydrodynamic clutch according to any one of claims 14 to 16, **characterised in that** the component carrying the orifice region (41.1, 41.2) is formed by the tube portion directed radially with respect to the clutch axis (A) at least in part against the direction of gravity.

21. Hydrodynamic clutch according to any one of claims 7 to 20, **characterised in that** the through-orifices (27) are arranged radially in the region of the bladed portion (44) of the bladed wheel (2, 3).

22. Hydrodynamic clutch according to any one of claims 7 to 21, **characterised in that** the through-orifices (27, 27.1) are arranged radially in the region of the portion of the bladed wheel (2, 3) which is free from blades (44).

23. Hydrodynamic clutch according to any one of claims 7 to 22, **characterised in that** the primary and secondary bladed wheel (2, 3) together form a working chamber (4).

24. Hydrodynamic clutch according to claim 23, **characterised in that** the primary and the secondary bladed wheel (2, 3) together form at least one further working chamber (5).

25. Hydrodynamic clutch according to either of claims 23 or 24, **characterised in that** the retention chamber (40) is associated with the primary bladed wheel (2).

26. Hydrodynamic clutch according to claim 23, **characterised in that** the retention chamber (40) is associated with the secondary bladed wheel (3).

27. Hydrodynamic clutch according to any one of claims 7 to 26, **characterised in that** the retention chamber (40) extends radially into a region arranged on a smaller diameter than the external circumference of the bladed wheel (D_{AS}).

## Revendications

1. Procédé pour fabriquer une protection de sur-remplissage sur un embrayage hydrodynamique (1), comprenant pour le moins deux roues à palettes (2, 3), qui forment au moins une chambre de travail (4, 5) torique pouvant être remplie par un fluide ;
dans lequel le niveau de remplissage est établi par une valeur caractérisant pour le moins de manière indirecte le niveau de remplissage et dans lequel l'admission de fluide est interrompue lorsque le niveau de remplissage maximum est atteint ;
**caractérisée par** les caractéristiques suivantes :
1.1 dans lequel, lors du procédé de remplissage dans un rapport défini en fonction du niveau de remplissage de l'embrayage, le fluide provenant de la chambre de travail est dirigé dans une chambre de retenue (40) couplée à la chambre de travail (4, 5) par au moins une ouverture de passage dans une roue à palettes ;
1.2 dans lequel un dispositif de production de la pression hydrodynamique respectivement de collecte de la pression hydrodynamique (32, 32.1, 32.2) est inséré dans la chambre de retenue (40);
1.3 dans lequel le dispositif de production de la pression hydrodynamique respectivement de collecte de la pression hydrodynamique (32, 32.1, 32.2) est placé face à la chambre de retenue de manière à ce que
1.3.1 dans un premier niveau du niveau de remplissage, qui est plus faible que le niveau de remplissage maximum, aucune ou uniquement une très légère première pression (p1) constante par rapport au premier niveau de remplissage total soit atteinte par le biais du dispositif de production de la pression hydrodynamique respectivement de collecte de la pression hydrodynamique (32, 32.1, 32.2) et
1.3.2 dans un deuxième niveau du niveau de remplissage, qui correspond au niveau de remplissage maximum, une deuxième pression nettement plus marquée (p2) soit obtenue et ladite deuxième pression serve pour le moins indirectement à la commande d'un dispositif (21, 64) afin d'arrêter l'admission de fluide vers la chambre de travail (4, 5), moyennant quoi un saut de signal survient du moins lors de la transition d'un état à un autre.

2. Procédé selon la revendication 1 avec un dispositif de production de la pression hydrodynamique respectivement de collecte de la pression hydrodynamique sous forme pour le moins d'un tuyau de pression hydrodynamique (32, 32.1, 32.2) disposant d'une zone d'ouverture (41.1, 41.2) qui s'étend dans la chambre de retenue (40) ;
2.1 avec lequel, seulement au deuxième niveau du niveau de remplissage, le fluide est admis dans la chambre de retenue (40) via la zone d'ouverture (41.1, 41.2) située au niveau du tuyau de pression hydrodynamique (32, 32.1, 32.2) et la pression dynamique est atteinte dans le tuyau de pression hydrodynamique (32, 32.1, 32.2), qui agit comme une deuxième valeur de pression accrue ;
2.2 avec lequel la deuxième pression accrue agit pour le moins indirectement comme un signal d'entrée d'un dispositif de commande (60, 61).

3. Procédé selon l'une des revendications 1 ou 2, **caractérisé en ce que** le niveau de remplissage maximum correspond au niveau de remplissage théorique maximum autorisé de 100 %.

4. Procédé selon l'une des revendications 1 ou 2, **caractérisé en ce que** le niveau de remplissage maximum est ajusté librement grâce au positionnement du dispositif de production de la pression hydrodynamique respectivement de collecte de la pression hydrodynamique (32, 32.1, 32.2) en face de la chambre de retenue (40).

5. Procédé selon l'une quelconque des revendications 1 à 4, **caractérisé en ce que** l'interruption de l'alimentation en fluide vers la chambre de travail (4, 5) est temporairement retardée afin d'enregistrer la deuxième valeur de pression accrue.

6. Procédé selon l'une quelconque des revendications 1 à 5, **caractérisé par** les caractéristiques suivantes :
6.1 avec lequel, suite à l'interruption due à l'enregistrement d'une première valeur de pression (p1), l'admission de fluide est à nouveau autorisée ;
6.2 avec lequel, lors du nouvel enregistrement de la deuxième valeur de pression accrue (p2), la vitesse d'entraînement actuelle ou une valeur caractérisant pour le moins indirectement celle-ci est en outre déterminée et est compensée par une valeur de comparaison prédéterminée à partir de laquelle un mode de fonctionnement de la reconnaissance du niveau de remplissage s'exécute correctement ;
6.3 avec lequel, lors du sous-dépassement de la vitesse d'entraînement ou de la valeur caractérisant pour le moins indirectement celui-ci et uniquement du relevé de la première valeur de pression (p1), le processus de remplissage se poursuit, alors que, lors de la reconnaissance du deuxième niveau du niveau de remplissage, le processus de remplissage se poursuit jusqu'à atteindre la valeur de comparaison;
6.4 lors de l'atteinte de la valeur de comparaison et de la reconnaissance du deuxième niveau du niveau de remplissage, la chambre de travail (4, 5) de l'embrayage hydrodynamique est temporairement vidée, moyennant quoi le processus de remplissage est à nouveau activé lorsque l'on atteint la première valeur de pression (p1) et est exécuté pendant une période prédéterminée ;
6.5 après une période d'attente, l'état d'une première (p1) ou d'une deuxième pression (p2) est à nouveau testé.

7. Procédé selon l'une quelconque des revendications 1 à 6, dans lequel un circuit de refroidissement (10) est pour le moins associé à la chambre de travail (4, 5), **caractérisé par** les caractéristiques suivantes :
7.1 avec lequel la température actuelle est fixée dans le circuit de refroidissement (10) ;
7.2 avec lequel, lors du dépassement d'une température maximale autorisée, le fluide est vidangé du circuit de refroidissement (10) pendant une période prédéterminée ;
7.3 avec lequel le fluide alimente le circuit de refroidissement (10) durant ou après cette durée ;
7.4 avec lequel, après l'échange réussi du fluide, la température est fixée dans le circuit de refroidissement (10) et comparée, après l'échange du fluide, à une deuxième autre valeur thermique autorisée pour le régime, et le processus de remplissage est interrompu lors d'écart de régulation et de l'apparition supplémentaire de la deuxième valeur de pression accrue (p2) et le fluide est à nouveau vidangé.

8. Embrayage hydrodynamique pour la réalisation du procédé selon l'une quelconque des revendications 1 à 7 ;
8.1 avec pour le moins deux roues à palettes, une roue à palettes primaire (2) et une roue à palettes secondaire (3), qui forment ensemble pour le moins une chambre de travail (4, 5) torique pouvant être remplie avec du fluide ;
8.2 une conduite d'alimentation en fluide (17, 82) est pour le moins associée à la chambre de travail torique (4, 5) ;
8.3 un dispositif (32, 32.1, 32.2) est ajouté à la chambre de travail (4, 5) pour enregistrer une valeur caractérisant pour le moins indirectement le niveau de remplissage ;
8.4 le dispositif (32, 32.1, 32.2) est couplé pour le moins indirectement à un dispositif (21, 64) qui régule le volume d'alimentation vers la chambre de travail (4, 5) ;
**caractérisé par** les caractéristiques suivantes :
8.5 le dispositif (32, 32.1, 32.2), pour enregistrer une valeur caractérisant pour le moins indirectement le niveau de remplissage, comprend
8.5.1 une chambre de retenue (40) associée à une roue à palettes (2, 3) et couplée à une chambre de travail (4, 5) par au moins une ouverture de passage d'une roue à palettes et
8.5.2 un dispositif de production de la pression hydrodynamique respectivement de collecte de la pression hydrodynamique (32, 32.1, 32.2) qui s'étend dans la chambre de retenue (40), moyennant quoi le réglage du dispositif de production de la pression hydrodynamique respectivement de collecte de la pression hydrodynamique (32, 32.1, 32.2) par rapport à la chambre de retenue (40) s'effectue de manière à ce que le dispositif de production de la pression hydrodynamique respectivement de collecte de la pression hydrodynamique (32, 32.1, 32.2) admette tout d'abord le fluide pour un niveau précis de fluide dans la chambre de retenue (40), qui corresponde au taux de remplissage maximum et que la pression hydrodynamique obtenue par ce moyen serve de signal pour au moins la commande du dispositif afin d'interrompre l'alimentation vers la chambre de travail (4, 5).

9. Embrayage hydrodynamique selon la revendication 8, **caractérisé en ce que** la chambre de retenue (40) est formée à partir d'un canal d'absorption (26) associé à une roue à palettes (2, 3).

10. Embrayage hydrodynamique selon la revendication 9, **caractérisé en ce que** le canal d'absorption (26) est formé à partir d'un composant séparé, amovible et combinable avec la roue à palettes (2, 3).

11. Embrayage hydrodynamique selon la revendication 9, **caractérisé en ce que** le canal d'absorption (26, 22) est formé à partir de la roue à palette (2, 3).

12. Embrayage hydrodynamique selon l'une quelconque des revendications 8 à 11, **caractérisé en ce que** le dispositif de production de la pression hydrodynamique respectivement de collecte de la pression hydrodynamique (32, 32.1, 32.2) est réalisé sur mesure dans sa position face à la chambre de retenue (40).

13. Embrayage hydrodynamique selon l'une quelconque des revendications 8 à 12, **caractérisé en ce que** le dispositif de production de la pression hydrodynamique respectivement de collecte de la pression hydrodynamique est réalisé sous forme pour le moins d'un tuyau de pression hydrodynamique (32, 32.1, 32.2).

14. Embrayage hydrodynamique selon la revendication 13, **caractérisé par** les caractéristiques suivantes :
14.1 le tuyau de pression hydrodynamique (32, 32.1, 32.2) comprend au moins un composant (42.1, 42.2) supportant une zone d'ouverture (41.1, 41.2) destinée à l'admission de fluide ;
14.2 le composant supportant la zone d'ouverture (42.1, 42.2) est relié à un élément tubulaire par rapport à l'arbre d'embrayage (A) dans le sens radial, et dirigé pour le moins en partie dans le sens opposé au sens de gravité.

15. Embrayage hydrodynamique selon la revendication 14, **caractérisé en ce que** le composant supportant la zone d'ouverture (42.1, 42.2) est placé essentiellement en parallèle par rapport au niveau du fluide (43) dans la chambre de retenue (40).

16. Embrayage hydrodynamique selon l'une des revendications 14 ou 15, **caractérisé en ce que** le composant supportant la zone d'ouverture (42.1, 42.2) s'étend en direction de la roue à palettes (2, 3).

17. Embrayage hydrodynamique selon l'une des revendications 14 ou 15, **caractérisé en ce que** le composant supportant la zone d'ouverture (42.1, 42.2) s'étend dans le sens circonférentiel.

18. Embrayage hydrodynamique selon l'une des revendications 16 ou 17, **caractérisé par** les caractéristiques suivantes :
18.1 la zone d'ouverture (41.1, 41.2) est dirigée dans le sens circonférentiel ;
18.2 pour la marche arrière, deux tuyaux de pression hydrodynamique (32.1, 32.2) dotés de zones d'ouvertures (41.1, 41.2) opposées l'une à l'autre sont prévus ;
18.3 les deux tuyaux de pression hydrodynamique (32.1, 32.2) peuvent être reliés au moyen d'une soupape (46) à une conduite commune (49).

19. Embrayage hydrodynamique selon l'une des revendications 16 ou 17, **caractérisé par** les caractéristiques suivantes :
19.1 la zone d'ouverture (41.1, 41.2) est dirigée dans le sens circonférentiel ;
19.2 deux zones d'ouverture opposées l'une à l'autre sont prévues, pour la marche arrière, au niveau du tuyau de pression hydrodynamique.

20. Embrayage hydrodynamique selon l'une quelconque des revendications 14 à 16, **caractérisé en ce que** le composant supportant la zone d'ouverture (42.1, 42.2) est formé de l'élément tubulaire par rapport à l'arbre d'embrayage (A) dans le sens radial, et dirigé pour le moins en partie dans le sens opposé au sens de gravité.

21. Embrayage hydrodynamique selon l'une quelconque des revendications 7 à 20, **caractérisé en ce que** les ouvertures de passage (27) sont disposées, dans le sens radial, au niveau d'une pièce (44) de la roue à palettes (2,3) disposant d'un aubage.

22. Embrayage hydrodynamique selon l'une quelconque des revendications 7 à 21, **caractérisé en ce que** les ouvertures de passage (27, 27.1) sont disposées, dans le sens radial, au niveau de la partie de la roue à palettes (2,3) ne disposant pas d'un aubage (44).

23. Embrayage hydrodynamique selon l'une quelconque des revendications 7 à 22, **caractérisé en ce que** la roue à palettes primaire et la roue à palettes secondaire (2, 3) forment toutes deux une chambre de travail (4).

24. Embrayage hydrodynamique selon la revendication 23, **caractérisé en ce que** la roue à palettes primaire et la roue à palettes secondaire (2, 3) constituent à nouveau, toutes les deux, une autre chambre de travail (5).

25. Embrayage hydrodynamique selon l'une des revendications 23 ou 24, **caractérisé en ce que** la chambre de retenue (40) est associée à la roue à palettes primaire (2).

26. Embrayage hydrodynamique selon la revendication 23 ou 24, **caractérisé en ce que** la chambre de retenue (40) est associée à la roue à palettes secondaire (3).

27. Embrayage hydrodynamique selon l'une quelconque des revendications 7 à 26, **caractérisé en ce que** la chambre de retenue (40) s'étend, dans le sens radial, jusqu'à une zone dont le diamètre est inférieur à la circonférence extérieure de la roue à palettes (D_{AS}).
